(19) **Europäisches Patentamt / European Patent Office / Office européen des brevets**

(11) **EP 4 408 047 A1**

(12) **EUROPEAN PATENT APPLICATION**
published in accordance with Art. 153(4) EPC

(43) Date of publication:
**31.07.2024 Bulletin 2024/31**

(21) Application number: **22882949.5**

(22) Date of filing: **20.10.2022**

(51) International Patent Classification (IPC):
**H04W 8/26** (2009.01)

(52) Cooperative Patent Classification (CPC):
**H04W 8/26; H04W 28/06**

(86) International application number:
**PCT/CN2022/126457**

(87) International publication number:
**WO 2023/066344 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2021 CN 202111229589**

(71) Applicant: **Huawei Technologies Co., Ltd.**
**Shenzhen, Guangdong 518129 (CN)**

(72) Inventors:
• **XIE, Xi**
  **Shenzhen, Guangdong 518129 (CN)**
• **CHANG, Junren**
  **Shenzhen, Guangdong 518129 (CN)**
• **LOU, Chong**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND COMMUNICATION APPARATUS**

(57) This application discloses a communication method and a communication apparatus. The method includes: A terminal device obtains first subgroup configuration information corresponding to a first PLMN, and receives paging from a first cell based on the first subgroup configuration information. The first PLMN is a PLMN associated with the terminal device, the first PLMN belongs to a PLMN set, and the PLMN set is associated with the first cell. Subgroup configuration information may be considered as configuration information for grouping terminal devices, and a terminal device may determine, based on the subgroup configuration information, a terminal device group to which the terminal device belongs. According to the method, different PLMNs may have corresponding subgroup configuration information, so that terminal device groups controlled by a plurality of core network devices can be distinguished. Even if subgroup IDs allocated by different core network devices associated with the first cell to terminal devices are the same, subgroup IDs actually used by the different core network devices to initiate paging through an access network device are different. Therefore, a probability of causing a paging false alarm can be reduced.

FIG. 3

**Description**

**CROSS-REFERENCE TO RELATED APPLICATIONS**

This application claims priority to Chinese Patent Application No. 202111229589.9, filed with the China National Intellectual Property Administration on October 21, 2021 and entitled "COMMUNICATION METHOD AND COMMUNICATION APPARATUS", which is incorporated herein by reference in its entirety.

**TECHNICAL FIELD**

This application relates to the field of paging technologies, and in particular, to a communication method and a communication apparatus.

**BACKGROUND**

An access network device may send paging indication information to terminal devices based on a terminal device subgrouping mechanism, to initiate paging on the terminal devices. To be specific, the paging indication information sent by the access network device may indicate a to-be-paged terminal device group. If a terminal device determines that the paging indication information is for a terminal device group to which the terminal device belongs, the terminal device receives paging; otherwise, the terminal device does not receive paging.

The terminal device subgrouping mechanism includes core network (core network, CN) controlled subgrouping, that is, a core network device groups terminal devices. Different core network devices may use different policies for grouping terminal devices. When a cell is associated with a plurality of core network devices, that is, there may be terminal devices controlled by different core network devices in one cell, because the different core network devices group the terminal devices independently, subgroup IDs allocated by the different core network devices to the terminal devices may be the same. As a result, a paging false alarm is caused. For example, a cell 1 is associated with a core network device 1 and a core network device 2, a terminal device 1 and a terminal device 2 are in the cell 1, a subgroup ID allocated by the core network device 1 to the terminal device 1 is 1, and a subgroup ID allocated by the core network device 2 to the terminal device 2 is also 1. When the access network device needs to page the terminal device 1, because the subgroup ID corresponding to the terminal device 1 is 1, the paging indication information sent by the access network device indicates the subgroup ID 1. In addition, because a terminal device associated with the core network device 2 associated with the cell 1 also receives the paging indication information, the terminal device 2 also receives paging from the access network device based on the paging indication information. As a result, the terminal device 2 receives unnecessary paging, that is, the paging false alarm is caused.

It can be learned that when one cell is associated with a plurality of core network devices, a paging false alarm occurs due to a core network controlled subgrouping mechanism, which causes additional power consumption of a terminal device.

**SUMMARY**

This application provides a communication method and a communication apparatus, to reduce a probability of causing a paging false alarm, thereby reducing energy consumption of a terminal device.

According to a first aspect, a first communication method is provided. The method may be performed by a first communication apparatus, and the first communication apparatus may be a communication device or a communication apparatus that can support a communication device in implementing a function required by the method, for example, a chip system. The following uses an example in which the communication device is a terminal device for description. The method includes the following steps.

The terminal device obtains first subgroup configuration information corresponding to a first public land mobile network (public land mobile network, PLMN), and receives paging from a first cell based on the first subgroup configuration information. The first PLMN is a PLMN associated with the terminal device, the first PLMN belongs to a PLMN set, and the PLMN set is associated with the first cell.

Correspondingly, according to a second aspect, a first communication method is provided. The method may be performed by a second communication apparatus, and the second communication apparatus may be a communication device or a communication apparatus that can support the communication device in implementing a function required by the method, for example, a chip system. The following uses an example in which the communication device is an access network device for description. The method includes the following steps.

The access network device sends first subgroup configuration information corresponding to a first PLMN and paging indication information. The first PLMN is a PLMN associated with a terminal device, the first PLMN belongs to a PLMN set, and the PLMN set is associated with a first cell. The paging indication information is used to page the terminal device in the first cell.

It may be understood that the first cell may be associated with a plurality of PLMNs. Alternatively, it may be understood that the first cell may be associated with a plurality of core network devices. Subgroup configuration information may be considered as configuration information for grouping terminal devices, and a terminal device may determine, based on the subgroup configuration information, a subgroup ID of a terminal device group to which the terminal device belongs. According to the solution in embodiments of this application, different PLMNs have corresponding subgroup configuration information, so that terminal device groups controlled by a plurality of core network devices can be distinguished. Subgroup IDs of terminal devices associated with different core network devices in a same cell may be different by using subgroup configuration information corresponding to PLMNs associated with the terminal devices. Even if subgroup IDs allocated, to the terminal devices, by the different core network devices associated with the first cell are the same, subgroup IDs (namely, subgroup IDs included in the paging indication information) actually used by the different core network devices to initiate paging to the terminal devices through the access network device are different. Therefore, a probability of causing a paging false alarm can be reduced.

In a possible implementation of the first aspect, the terminal device further receives indication information, where the indication information indicates the first PLMN, or the indication information indicates the first PLMN and the first subgroup configuration information. Correspondingly, in a possible implementation of the second aspect, the access network device further sends indication information, where the indication information indicates the first PLMN, or the indication information indicates the first PLMN and the first subgroup configuration information. It may be understood that the access network device may indicate, to the terminal device, that the first PLMN is paged, so that when the terminal device determines that an associated PLMN is the first PLMN, the terminal device may receive paging from the first cell. A correspondence between the first PLMN and the first subgroup configuration information may be predefined, so that the access network device does not need to send the first subgroup configuration information, thereby reducing signaling overheads. Alternatively, the access network device may further send the first subgroup configuration information before indicating the first PLMN. This is more flexible.

In a possible implementation of the first aspect or the second aspect, the first subgroup configuration information indicates one or more of the following:

(1) A correspondence between a first group number and a second group number. The first group number is a subgroup ID used by the terminal device to receive paging from the first cell, and the second group number is a subgroup ID from a core network device. Although paging sent by the core network device carries the second group number, the access network device may determine, based on the correspondence between the first group number and the second group number, the first group number used by the terminal device to receive paging from the first cell, that is, the access network device sends the paging indication information that includes the first group number. For the terminal device, the terminal device may alternatively determine, based on the second group number and the correspondence between the first group number and the second group number, the first group number used by the terminal device to receive paging from the first cell. That is, although a subgroup ID allocated by the core network device to the terminal device is the second group number, a subgroup ID carried in the paging indication information sent by the access network device is the first group number. According to this solution, even if subgroup IDs allocated, to terminal devices, by different CNs associated with the first cell are the same, subgroup IDs actually used by the different CNs to initiate paging to the terminal devices are different. Therefore, a probability of causing a paging false alarm can be reduced.

(2) Information about a first paging early indication (paging early indication, PEI), where the first PEI indicates whether to receive paging. That is, CN subgrouping mechanisms of a plurality of PLMNs associated with the first cell are determined by using the information about the PEI. Information about different PEIs may correspond to different PLMNs, so that a terminal device in each PLMN determines, based on the first PEI, whether paging sent by the access network device is directed to the terminal device. That is, according to this solution, paging indication information of different CNs/PLMNs/non-public networks (non-public networks, NPNs) is different, so that a terminal device may determine, based on a PEI corresponding to a CN/PLMN/NPN to which the terminal device belongs, whether the terminal device is indicated to receive paging. This avoids receiving paging indication information from another irrelevant CN/PLMN/NPN. Therefore, a probability of causing a paging false alarm can be reduced.

(3) Subgroup indication configuration information, where the subgroup indication configuration information may be used to determine a location of a first indication in the paging indication information, and the first indication corresponds to a terminal device group to which the terminal device is located. The first indication may indicate whether to monitor paging. For example, the first indication may indicate whether to monitor a physical downlink control channel (physical downlink control channel, PDCCH) corresponding to the terminal device group, and the terminal device may determine, based on the first indication, to receive the paging indication information or to receive a paging message carried on a physical downlink shared channel (physical downlink shared channel, PDSCH). The paging indication information may be considered as paging indication information sent by the access network device. Different PLMNs may correspond to different subgroup indication configuration information. The terminal device determines, based on the subgroup indication configuration information, a location of a subgroup indication corresponding to the terminal device in the paging indication information. That is, the terminal device may determine, based on a PLMN to which the terminal device belongs, locations in the paging indication information to monitor the paging indication information, to determine whether to monitor paging. This avoids monitoring paging indication information from another irrelevant CN/PLMN/NPN. Therefore, a probability of causing a paging false alarm can be reduced.

(4) Whether the first cell supports a CN subgrouping mechanism used for the first PLMN. If the first cell does not support the CN subgrouping mechanism used for the first PLMN, the terminal device does not use a subgroup ID allocated by a CN associated with the first PLMN to the terminal device to receive paging from the first cell. If the first cell supports the CN subgrouping mechanism used for the first PLMN, the terminal device may receive paging from the first cell by using a subgroup ID allocated to the terminal device by a CN associated with the first PLMN. Alternatively, the terminal device may receive paging from the first cell based on one or more of (1) to (3). It may be understood that receiving paging from the first cell includes determining whether to receive paging from the first cell and how to receive paging from the first cell.

In a possible implementation of the first aspect or the second aspect, the first group number and the second group number satisfy one or more of the following relationships: ID = k mod (n2 - n1 + 1) + n1, or ID = k + M, where ID is the first group number, k is the second group number, mod is a modulo operation, a value range of the first group number is greater than or equal to n1 and less than or equal to n2, n1 and n2 are integers, M is an offset value between the first group number and the second group number, and M is an integer.

Correspondingly, the first subgroup configuration information includes one or more of the following: the value range of the first group number or the offset value between the first group number and the second group number. It may be understood that the first subgroup configuration information may include the value range of the first group number or the offset value between the first group number and the second group number. The terminal device determines a subgroup ID of the terminal device in the first cell based on the first subgroup configuration information and the second group number, that is, the terminal device determines the first group number.

In a possible implementation of the first aspect or the second aspect, the first subgroup configuration information indicates the information about the first PEI, and the first subgroup configuration information includes one or more of the following: a search space configuration of the first PEI, a control resource set configuration of the first PEI, a time domain resource location for monitoring the first PEI, or a frequency domain resource location for monitoring the first PEI. Content included in the first subgroup configuration information varies based on different implementation forms of the first PEI. The first PEI is implemented by using a sequence or a signal. In this case, the information about the first PEI may include a sequence or a signal corresponding to the first PEI. The first PEI is implemented through DCI. In this case, the information about the first PEI may include time frequency location information for monitoring the first PEI, so that the terminal device can determine, based on the monitored first PEI, whether to receive paging from the first cell.

Based on different implementations of the first subgroup configuration information, paging received by the terminal device from the first cell based on the first subgroup configuration information is also different. For example, the first subgroup configuration information indicates the correspondence between the first group number and the second group number, and that the terminal device receives paging from the first cell based on the first subgroup configuration information includes: The terminal device receives paging indication information, where the paging indication information indicates a subgroup ID of the terminal device, and if the indicated subgroup ID matches the first group number determined by the terminal device based on the correspondence, the terminal device determines to receive paging from the first cell. For another example, the first subgroup configuration information indicates the information about the first PEI, and that the terminal device receives paging from the first cell based on the first subgroup configuration information includes: The terminal device monitors the first PEI based on the information about the first PEI, and determines, based on the first PEI, whether to receive paging from the first cell. If the first PEI indicates to receive paging, the terminal device receives paging from the first cell.

According to a third aspect, a second communication method is provided. The method may be performed by a first communication apparatus, and the first communication apparatus may be a communication device or a communication apparatus that can support the communication device in implementing a function required by the method, for example, a chip system. The following uses an example in which the communication device is a terminal device for description. The method includes the following steps.

The terminal device receives first indication information, where the first indication information is used to page a terminal device associated with a first PLMN, the first PLMN belongs to a PLMN set, and the PLMN set is associated with a first cell. The terminal device determines that an associated PLMN is the first PLMN, and the terminal device receives paging from the first cell.

Correspondingly, according to a fourth aspect, a second communication method is provided. The method may be performed by a second communication apparatus, and the second communication apparatus may be a communication device or a communication apparatus that can support the communication device in implementing a function required by the method, for example, a chip system. The following uses an example in which the communication device is an access network device for description. The method includes the following steps.

The access network device sends first indication information, and sends paging in a first cell. The first indication information indicates a first PLMN, the first PLMN belongs to a PLMN set, and the PLMN set is associated with the first cell.

In embodiments of this application, paging indication information indicates a PLMN for which this time of paging is performed. A terminal device associated with a PLMN indicated by the paging indication information receives paging. A terminal device that is not associated with a PLMN indicated by the paging indication information may not receive paging. That is, a terminal device associated with one associated PLMN does not receive paging in another PLMN. Therefore, a probability of causing a paging false alarm can be reduced.

In a possible implementation of the third aspect or the fourth aspect, the first indication information may include an identity or an index of the first PLMN, to indicate the first PLMN.

In a possible implementation of the third aspect or the fourth aspect, the first indication information is carried in downlink control information (downlink control information, DCI) or a PEI. Alternatively, the first indication information is a first PEI, and different PEIs may correspond to different PLMNs. That is, a PEI may be implemented through a signal sequence, and different sequences correspond to different PLMNs. An implementation of the first indication information is not limited in embodiments of this application. For example, the first indication information may be implemented through signaling, or may be implemented through a signal sequence.

In a possible implementation of the third aspect, the terminal device further receives second indication information, and correspondingly, the access network device further sends second indication information, where the second indication information indicates a terminal device group. In addition to indicating a PLMN for which current paging is performed, the access network device may further indicate a group of terminal devices for which current paging is performed, to reduce power consumption of a terminal device that does not need to receive paging. Correspondingly, the terminal device determines a terminal device group indicated by the second indication information, and receives paging from the first cell.

According to a fifth aspect, a third communication method is provided. The method may be performed by a first communication apparatus, and the first communication apparatus may be a communication device or a communication apparatus that can support the communication device in implementing a function required by the method, for example, a chip system. The following uses an example in which the communication device is a first core network device for description. The method includes the following steps.

The first core network device receives subgrouping policy information from a second core network device, and determines a subgrouping policy for an associated terminal device based on the subgrouping policy information. The first core network device and the second core network device are associated with a first cell. The subgrouping policy information indicates a policy used by the second core network device to group associated terminal devices.

Correspondingly, according to a sixth aspect, a third communication method is provided. The method may be performed by a second communication apparatus, and the second communication apparatus may be a communication device or a communication apparatus that can support the communication device in implementing a function required by the method, for example, a chip system. The following uses an example in which the communication device is a second core network device for description. The method includes the following steps.

The second core network device determines subgrouping policy information, and sends the subgrouping policy information to a first core network device. The first core network device and the second core network device are associated with a first cell. The subgrouping policy information indicates a policy used by the second core network device to group associated terminal devices.

A plurality of core network devices associated with the first cell negotiate, with each other, a policy used for grouping associated terminal devices, to prevent allocating a same subgroup ID to terminal devices associated with different core network devices in a same cell when the terminal devices are grouped by the core network devices. Therefore, a probability of causing a paging false alarm can be reduced.

In a possible implementation of the fifth aspect or the sixth aspect, the subgrouping policy information indicates one or more of the following: whether the second core network device groups terminal devices, a total number of subgroups of terminal devices used by the second core network device, or a value range of subgroup IDs of terminal devices used by the second core network device. The first core network device may determine, based on the subgrouping policy information of the second core network device, the value range of the subgroup IDs used by the terminal devices, so that there is no intersection between value ranges of subgroup IDs allocated by the first core network device and the second core network device to the terminal device. Therefore, terminal devices controlled by different core network devices in a same cell can be distinguished.

In a possible implementation of the fifth aspect, the method further includes: The first core network device further receives subgrouping assistance information from the terminal device, where the subgrouping assistance information indicates a paging probability. The paging probability is a ratio of first duration to second duration, the first duration is duration of paging that is for the terminal device and that is received by the terminal device in the second duration, and the second duration is preset duration. Alternatively, the paging probability is a ratio of a first value to a second value, the first value is a number of paging occasions in which paging that is for the terminal device and that is received by the terminal device is located, and the second value is a number of paging occasions monitored by the terminal device. In this solution, two manners of determining the paging probability are provided, to accurately represent a frequency at which the terminal device is paged. In addition, the second duration or a total number of monitored POs is flexibly adjusted, to obtain a more accurate variation of the paging probability or reduce updating of the paging probability.

In a possible implementation of the fifth aspect, the method further includes: The first core network device sends the subgrouping assistance information to the second core network device. The first core network device associated with the terminal device may send the subgrouping assistance information from the terminal device to the second core network device, so that the second core network device may determine a to-be-used subgrouping policy based on the subgrouping assistance information.

According to a seventh aspect, a fourth communication method is provided. The method may be performed by a first communication apparatus, and the first communication apparatus may be a communication device or a communication apparatus that can support a communication device in implementing a function required by the method, for example, a chip system. The following uses an example in which the communication device is a terminal device for description. The method includes the following steps.

The terminal device determines a first group number, and receives paging from a first cell based on the first group number. The first group number is a subgroup ID of a terminal device group to which the terminal device belongs, and the first group number ID satisfies: ID = UE_ID mod N + Q. UE_ID is used to identify the terminal device, N is a total number of subgroups of terminal devices used by a core network device or an access network device, and Q is configured or predefined, or Q is related to N. That is, a new subgrouping mechanism is provided, and the subgrouping mechanism may enable the foregoing CN subgrouping mechanism and a UE_ID based subgrouping mechanism used by an access network device to correspond to different value ranges of subgroup IDs on an access network side, thereby avoiding a paging false alarm.

According to an eighth aspect, an embodiment of this application provides a communication apparatus. The communication apparatus has a function of implementing behavior in the method embodiments of the first aspect (or the third aspect). For beneficial effects, refer to descriptions of the first aspect (or the third aspect). Details are not described herein again. The communication apparatus may be the terminal device in the first aspect (or the third aspect), or the communication apparatus may be an apparatus, for example, a chip or a chip system, that can implement the method provided in the first aspect (or the third aspect). In a possible design, the communication apparatus includes a corresponding means (means) or module configured to perform the method in the first aspect (or the third aspect). For example, the communication apparatus includes a processing unit (sometimes also referred to as a processing module or a processor) and/or a transceiver unit (sometimes also referred to as a transceiver module or a transceiver). These units (modules) may perform corresponding functions in the method examples in the first aspect (or the third aspect). For details, refer to detailed descriptions in the method examples. Details are not described herein again.

According to a ninth aspect, an embodiment of this application provides a communication apparatus. The communication apparatus has a function of implementing behavior in the method embodiments of the second aspect (or the fourth aspect). For beneficial effects, refer to descriptions of the second aspect (or the fourth aspect). Details are not described herein again. The communication apparatus may be the access network device in the second aspect (or the fourth aspect), or the communication apparatus may be an apparatus, for example, a chip or a chip system, that can implement the method provided in the second aspect (or the fourth aspect). In a possible design, the communication apparatus includes a corresponding means (means) or module configured to perform the method in the second aspect (or the fourth aspect). For example, the communication apparatus includes a processing unit (sometimes also referred to as a processing module or a processor) and/or a transceiver unit (sometimes also referred to as a transceiver module or a transceiver). These units (modules) may perform corresponding functions in the method examples in the second aspect (or the fourth aspect). For details, refer to detailed descriptions in the method examples. Details are not described herein again.

According to a tenth aspect, an embodiment of this application provides a communication apparatus. The communication apparatus has a function of implementing behavior in the method embodiments of the fifth aspect. For beneficial effects, refer to descriptions of the fifth aspect. Details are not described herein again. The communication apparatus may be the first core network device in the fifth aspect, or the communication apparatus may be an apparatus, for example, a chip or a chip system, that can support the first core network device in the fifth aspect in implementing a function required by the method provided in the fifth aspect. In a possible design, the communication apparatus includes a corresponding means (means) or module configured to perform the method in the fifth aspect. For example, the communication apparatus includes a processing unit (sometimes also referred to as a processing module or a processor) and/or a transceiver unit (sometimes also referred to as a transceiver module or a transceiver). These units (modules) may perform corresponding functions in the method examples in the fifth aspect. For details, refer to detailed descriptions in the method examples. Details are not described herein again.

According to an eleventh aspect, an embodiment of this application provides a communication apparatus. The communication apparatus has a function of implementing behavior in the method embodiments of the sixth aspect. For beneficial effects, refer to descriptions of the sixth aspect. Details are not described herein again. The communication apparatus may be the second core network device in the sixth aspect, or the communication apparatus may be an apparatus, for example, a chip or a chip system, that can support the second core network device in the fifth aspect in implementing a function required by the method provided in the sixth aspect. In a possible design, the communication apparatus includes a corresponding means (means) or module configured to perform the method in the sixth aspect. For example, the communication apparatus includes a processing unit (sometimes also referred to as a processing module or a processor) and/or a transceiver unit (sometimes also referred to as a transceiver module or a transceiver). These units (modules) may perform corresponding functions in the method examples in the sixth aspect. For details, refer to detailed descriptions in the method examples. Details are not described herein again.

According to a twelfth aspect, an embodiment of this application provides a communication apparatus. The communication apparatus has a function of implementing behavior in the method embodiment of the seventh aspect. For beneficial effects, refer to descriptions of the seventh aspect. Details are not described herein again. The communication apparatus may be the terminal device in the seventh aspect, or the communication apparatus may be an apparatus, for example, a chip or a chip system, that can support the terminal device in the seventh aspect in implementing a function required by the method provided in the seventh aspect. In a possible design, the communication apparatus includes a corresponding means (means) or module configured to perform the method in the seventh aspect. For example, the communication apparatus includes a processing unit (sometimes also referred to as a processing module or a processor) and/or a transceiver unit (sometimes also referred to as a transceiver module or a transceiver). These units (modules) may perform corresponding functions in the method examples in the seventh aspect. For details, refer to detailed descriptions in the method examples. Details are not described herein again.

According to a thirteenth aspect, an embodiment of this application provides a communication apparatus. The communication apparatus may be the communication apparatus in any one of the eighth aspect to the twelfth aspect in the foregoing embodiments, or may be a chip or a chip system disposed in the communication apparatus in any one of the eighth aspect to the twelfth aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device, the access network device, the first core network device, or the second core network device in the foregoing method embodiments, or to perform the method performed by the network device in the foregoing method embodiments.

According to a fourteenth aspect, an embodiment of this application provides a communication apparatus. The communication apparatus includes an input/output interface and a logic circuit. The input/output interface is configured to input and/or output information. The logic circuit is configured to perform the method according to any one of the first aspect to the seventh aspect.

According to a fifteenth aspect, an embodiment of this application provides a chip system. The chip system includes a processor, may further include a memory and/or a communication interface, and is configured to implement the method according to any one of the first aspect to the seventh aspect. In a possible implementation, the chip system further includes the memory configured to store a computer program. The chip system may include a chip, or may include a chip and another discrete component.

According to a sixteenth aspect, an embodiment of this application provides a communication system. The communication system includes the communication apparatus according to the eighth aspect and the communication apparatus according to the ninth aspect.

According to a seventeenth aspect, this application provides a computer-readable storage medium. The computer-readable storage medium stores a computer program, and when the computer program is run, the method in any one of the first aspect to the seventh aspect is implemented.

According to an eighteenth aspect, a computer program product is provided. The computer program product includes computer program code, and when the computer program code is run, the method in any one of the first aspect to the seventh aspect is performed.

For beneficial effects of the eighth aspect to the eighteenth aspect and implementations thereof, refer to descriptions of the beneficial effects of the first aspect to the seventh aspect and implementations thereof.

**BRIEF DESCRIPTION OF DRAWINGS**

FIG. 1 is a schematic diagram of a shared cell according to an embodiment of this application;
FIG. 2 is a schematic diagram of a network architecture to which an embodiment of this application is applicable;
FIG. 3 is a schematic flowchart of a first communication method according to an embodiment of this application;
FIG. 4 is a schematic diagram of a mapping rule between a second group number and a first group number according to an embodiment of this application;
FIG. 5 is a schematic diagram of a correspondence between a PEI and a PLMN according to an embodiment of this application;
FIG. 6 is a schematic diagram of a correspondence between subgroup indication configuration information and a PLMN according to an embodiment of this application;
FIG. 7 is a schematic flowchart of a second communication method according to an embodiment of this application;
FIG. 8 is a schematic flowchart of a third communication method according to an embodiment of this application;
FIG. 9 is a schematic diagram of a structure of a communication apparatus according to an embodiment of this application;
FIG. 10 is a schematic diagram of another structure of a communication apparatus according to an embodiment of this application;
FIG. 11 is an example of a schematic diagram of a structure of a communication apparatus according to an embodiment of this application; and
FIG. 12 is an example of a schematic diagram of a structure of another communication apparatus according to an embodiment of this application.

**DESCRIPTION OF EMBODIMENTS**

To facilitate understanding of the technical solutions provided in embodiments of this application, some technical terms in embodiments of this application are first explained and described.

(1) Terminal device: A terminal device may be user equipment (user equipment, UE), and is sometimes also referred to as a terminal, an access station, a UE station, a remote station, a wireless communication device, a user apparatus, or the like. The terminal device is a device with a wireless transceiver function, and may send a signal to a network device, or receive a signal from the network device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an unmanned aerial vehicle, and a robot.

The terminal device in embodiments of this application may be a mobile phone (mobile phone), a tablet computer (pad), a computer with a wireless transceiver function, a VR terminal, an AR terminal, a wireless terminal in industrial control (industrial control), a wireless terminal in self driving (self driving), a smart speaker in an IoT network, a wireless terminal device in telemedicine, a wireless terminal device in a smart grid, a wireless terminal device in transportation safety, a wireless terminal device in a smart city, a wireless terminal device in a smart home, or the like. By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes.
The terminal device may further include a relay (relay). Alternatively, it may be understood that all devices that can perform data communication with a base station may be considered as terminal devices. If various terminal devices described above are located in a vehicle (for example, placed in the vehicle or installed in the vehicle), the terminal devices may be all considered as vehicle-mounted terminal devices, and the vehicle-mounted terminal devices are also referred to as on-board units (on-board unit, OBU). In addition, in embodiments of this application, the terminal device may be an apparatus configured to implement a function of a terminal, or may be an apparatus that can support a terminal device in implementing the function, for example, a chip system. The apparatus may be installed in the terminal device. For example, the terminal device may alternatively be a vehicle detector. In embodiments of this application, a chip system may include a chip, or may include a chip and another discrete component. In the technical solutions provided in embodiments of this application, an example in which an apparatus configured to implement a function of a terminal is a terminal device is used to describe the technical solutions provided in embodiments of this application.

(2) Access network device: An access network device is an access device through which a terminal device accesses a mobile communication system in a wireless manner, and the access device includes an access network (access network, AN) device, for example, a base station. Alternatively, a network device may be a device that communicates with the terminal device over an air interface. The network device may include an evolved NodeB (evolved NodeB, which may be referred to as an eNB or an e-NodeB for short) in an LTE system or a long term evolution-advanced (long term evolution-advanced, LTE-A) system. The eNB is an apparatus that is deployed in a radio access network and that meets a fourth generation (the fourth generation, 4G) standard and that provides a wireless communication function for a terminal device. Alternatively, the network device may be a new radio controller (new radio controller, NR controller), a gNodeB (gNodeB, gNB) in a 5G system, a central unit (central unit), a new radio base station, a radio remote module, a micro base station (also referred to as a small cell), a relay (relay), a distributed unit (distributed unit), a macro base station in various forms, a transmission reception point (transmission reception point, TRP), a transmission measurement function (transmission measurement function, TMF), a transmission point (transmission point, TP), or any other radio access device. This is not limited in embodiments of this application. Alternatively, the network device may include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. A specific technology and a specific device form that are used by the access network device are not limited in embodiments of this application. The network device may correspond to an eNB in a 4G system, and may correspond to a gNB in a 5G system.

In addition, a base station in embodiments of this application may include a central unit (central unit, CU) and a distributed unit (distributed unit, DU), and a plurality of DUs may be centrally controlled by one CU. The CU and the DU may be obtained through division based on protocol layer functions that the CU and the DU each have in a wireless network. For example, functions of a packet data convergence protocol (packet data convergence protocol, PDCP) layer and a protocol layer above the packet data convergence protocol (packet data convergence protocol, PDCP) layer are set on the CU, and functions of a protocol layer below the PDCP layer, for example, a radio link control (radio link control, RLC) layer and a medium access control (medium access control, MAC) layer, are set on the DU. It should be noted that division into the protocol layers is merely an example, and there may be another division of protocol layers. A radio frequency apparatus may be remotely deployed and is not placed in the DU, or may be integrated into the DU, or a part of the radio frequency apparatus is remotely deployed and a part of the radio frequency apparatus is integrated into the DU. This is not limited in embodiments of this application. In addition, in some embodiments, a control plane (control plane, CP) and a user plane (user plane, UP) of the CU may be further separated and implemented by different entities, which are respectively a control plane CU entity (CU-CP entity) and a user plane CU entity (CU-UP entity). In the network architecture, signaling generated by the CU may be sent to the terminal device through the DU, or signaling generated by UE may be sent to the CU through the DU. The DU may directly encapsulate the signaling at a protocol layer without parsing the signaling, and transparently transmit the signaling to the UE or the CU. In the network architecture, the CU is divided into a network device on a radio access network (radio access network, RAN) side. In addition, the CU may be divided into a network device on a core network (core network, CN) side. This is not limited in this application.

(3) CN: A CN serves as a bearer network to provide an interface to a data network (data network, DN), provides communication connection, authentication, management, and policy control for a terminal device, and also completes data service bearer for the terminal device. The CN may include the following network elements: an SMF network element, an AMF network element, a UDM network element, an AUSF network element, a policy control function (policy control function, PCF) network element, a user plane function (user plane function, UPF) network element, a network slice selection function (network slice selection function, NSSF) network element, a network exposure function (network exposure function, NEF) network element, an NRF, an application function (application function, AF) network element, and the like. It should be noted that the CN may include one or more CN devices. The CN device may be a network element configured to perform the foregoing single network function, or may be a network element configured to perform the foregoing plurality of network functions. When one CN device is configured to perform the plurality of network functions, the CN device may include one or more functional modules configured to perform the plurality of network functions. The functional modules may be software modules, or may be software/hardware modules. This is not limited in embodiments of this application.

(4) Paging: In a new radio (new radio, NR) system, an access network device or a core network device may initiate paging (paging) on terminal devices, to send paging to these terminal devices. For example, the access network device initiates paging (also referred to as RAN paging), and the access network device may initiate paging on a terminal device in a radio resource control (radio resource control, RRC) inactive mode (inactive mode). For another example, the core network device initiates paging (also referred to as CN paging), and the core network device may initiate paging on a terminal device in an RRC idle mode (idle mode) or an RRC inactive mode. It may be understood that during CN paging, the core network device indicates the access network device to initiate paging on a terminal device in an RRC idle mode, and after the access network device receives an indication from the core network device, the access network device initiates CN paging on the terminal device in the RRC idle mode.

A basic procedure of paging is as follows: The access network device or the core network device may select a specific paging range, that is, an area for sending paging (also referred to as a paging area). For example, for a terminal device in an RRC idle mode, the core network device may use, as the paging area, a registration area (registration area) to which the terminal device belongs. For a terminal device in an RRC inactive state, the access network device or the core network device may use, as the paging area, a radio access network (radio access network, RAN)-based notification area (RAN-based notification area, RNA) to which the terminal device belongs.

Generally, when the access network device or the core network device needs to page a terminal device, the access network device sends paging downlink control information (downlink control information, DCI) (which may also be referred to as paging indication information in this specification) in one or more paging occasions (paging occasion, PO), to indicate a resource for carrying a paging message. The terminal device receives/monitors (monitor)/detects (detect) the paging DCI in one or more POs in a paging cycle, to receive the paging message, and determines whether the access network device initiates paging on the terminal device.

The paging DCI includes a 2-bit field, and the field may indicate that the paging DCI includes scheduling information, includes a short message service (short message), or includes scheduling information and a short message service. The scheduling information is used to schedule the paging message. For example, the scheduling information includes time frequency resource information, modulation and coding information, or the like of the paging message. The short message service may indicate a system information update indication (that is, whether system information is changed), an earthquake and tsunami warning system (earthquake and tsunami warning system, ETWS) notification, a commercial mobile alert service (commercial mobile alert service, CMAS) notification, or the like. For example, refer to Table 1. Table 1 shows an indication manner of the 2-bit field included in the paging DCI.

**Table 1**

| Bit field (bit field) | Definition |
| --- | --- |
| Short message indicator (short message indicator) | Indicate a content type in DCI: "01" indicates that there is only scheduling information about a paging message; "10" indicates that there is only a short message service; "11" indicates that there are both scheduling information and a short message service of a paging message; and "00" is a reserved bit (that is, the value is not used) |
| Short message (short message) | System information update indication, earthquake and tsunami warning notification, or commercial mobile alert service notification |
| Frequency domain resource assignment (frequency domain resource assignment) | Indicate a frequency domain resource location of a paging message |
| Time domain resource assignment (time domain resource assignment) | Indicate a time domain resource location of a paging message |
| Other | Other scheduling information |
| Reserved | Reserved bits, that is, bits that are not used temporarily |

After detecting the paging DCI, the terminal device may decode the paging DCI. If the paging DCI includes scheduling information about a paging message, the terminal device continues to receive the paging message (paging message). If the paging message includes an identifier of the terminal device, the terminal device is paged. If the paging message does not include an identifier of the terminal device, the terminal device is not paged. If the paging DCI does not include scheduling information and includes only a short message service, the terminal device does not need to receive the paging message.

(5) Wake up signal (wake up signal, WUS): If an access network device needs to page a terminal device in a PO, the access network device sends a WUS before the PO. The terminal device may determine, by detecting the WUS, whether to monitor the PO, or the terminal device may determine, by detecting the WUS, whether to receive paging. This reduces energy consumption of the terminal device.

There are usually two implementations of WUS, and one of the implementations is implemented through signaling. In this implementation, whether the WUS exists may indicate whether wakeup is performed. To be specific, if the access network device sends the WUS, it indicates that paging is performed, and if the access network device does not send the WUS, it indicates that paging is not performed. The terminal device may determine, by determining whether the WUS is detected, whether a PO needs to be monitored. Alternatively, information carried in signaling may indicate whether wakeup is performed, that is, the WUS may carry indication information, and the indication information indicates whether wakeup is performed. For example, the indication information occupies one bit. When a value of the one bit is 0, it indicates that wakeup is performed. Correspondingly, when a value of the one bit is 1, it indicates that wakeup is not performed.

In another implementation of the WUS, states of the WUS (for example, two different sequences or signals are used) respectively indicate whether wakeup is performed. To be specific, if the access network device sends a WUS that is in one state, it indicates that there is a paging message; or if the access network device sends a WUS that is in another state, it indicates that there is no paging message. The terminal device may determine, based on a state of the detected WUS, whether a PO needs to be monitored. Alternatively, whether the WUS exists may indicate whether wakeup is performed. The terminal device may determine, by determining whether the WUS is detected, whether a PO needs to be monitored. It should be noted that the foregoing uses an example in which there are two states of the WUS. A number of states of the WUS is not limited in embodiments of this application. For example, there may be at least two states of the WUS. In a paging scenario, the WUS may also be referred to as a paging early indication (paging early indication, PEI). It should be noted that a specific name of the paging early indication is not limited in this specification, provided that whether to monitor a PO can be determined in advance by detecting the indication.

In addition, one WUS may be associated with one or more POs, that is, one WUS may indicate the terminal device to monitor or not monitor the one or more POs. For example, one WUS may be associated with a plurality of POs, and indication information of the one WUS may indicate whether to monitor the plurality of POs. Alternatively, one WUS may include indication information corresponding to the plurality of POs, and each piece of indication information may indicate whether to monitor a corresponding PO. For example, one WUS is associated with a PO 1, a PO 2, and a PO 3. In Example 1, the WUS may indicate whether to monitor the PO 1, the PO 2, and the PO 3. For example, if the WUS indicates to receive paging, it may be considered that terminal devices in the PO 1, the PO 2, and the PO 3 are indicated to receive paging. In Example 2, the WUS may include at least one indication that indicates whether a terminal device on a PO corresponding to the at least one indication receives paging. For example, the WUS includes an indication 1 corresponding to the PO 1, an indication 2 corresponding to the PO 2, and an indication 3 corresponding to the PO 3. For another example, the WUS may include an indication 1 corresponding to the PO 1 and the PO 2, and an indication 2 corresponding to the PO 3.

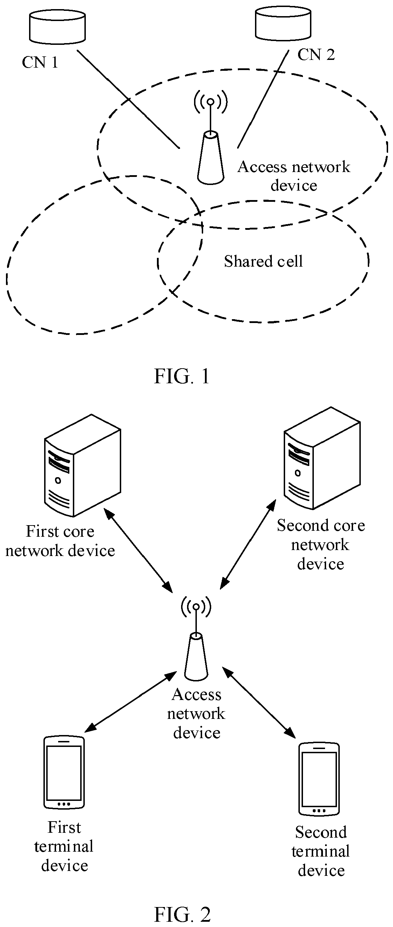

(6) Shared cell (shared cell): A shared cell is a cell shared by a plurality of operators, that is, a cell that supports network sharing. Network sharing may also be referred to as radio access network sharing (RAN sharing). Network sharing allows the plurality of operators to share resources of a same network according to an agreed allocation mechanism. The shared cell broadcasts, in system information, related information of a PLMN or an NPN associated with the shared cell, and the related information includes tracking area code (tracking area code, TAC), a cell identity (cell identity), and the like of the shared cell in the PLMN or the NPN. Different operators share an RAN, but do not share a CN, that is, the shared cell/an access network device is connected to a plurality of CNs. For example, refer to FIG. 1. FIG. 1 is a schematic diagram of the shared cell. In FIG. 1, an example in which the shared cell is associated with a CN 1 and a CN 2 is used. It may also be considered that the shared cell is associated with a plurality of PLMNs. It should be understood that the plurality of PLMNs associated with the shared cell are PLMNs corresponding to a plurality of CNs associated with the shared cell. That is, the shared cell may be a cell associated with the plurality of CNs, or may be a cell associated with the plurality of PLMNs. It should be noted that, unless otherwise specified, a PLMN and an NPN in this specification may be interchangeable, and a PLMN associated with a first cell and a CN associated with the first cell may also be interchangeable. For example, a PLMN for which paging is performed is equivalent to an NPN/a CN for which paging is performed.

(7) "At least one" refers to one or more, and "a plurality of" refers to two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one item (piece) of the following" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are used for distinguishing between a plurality of objects, but are not intended to limit an order, a time sequence, priorities, or importance of the plurality of objects. For example, a first core network device and a second core network device are merely used to

distinguish between different core network devices, but do not indicate different priorities, importance, or the like of the two core network devices.

The foregoing describes some technical terms in embodiments of this application, and the following describes technical features in embodiments of this application.

As described above, a terminal device monitors paging DCI in one or more POs. If the terminal device detects the paging DCI, the terminal device obtains scheduling information about paging based on the paging DCI, and then receives a paging message carried on a subsequent physical downlink shared channel (physical downlink shared channel, PDSCH) based on the scheduling information. The terminal device may determine, based on the paging message carried on the PDSCH, whether the terminal device is paged by an access network device or a core network device. A plurality of terminal devices may monitor a same PO. Because the terminal device receives the paging DCI and obtains only the scheduling information about paging based on the paging DCI, the terminal device needs to receive and decode a subsequent paging message to determine whether the terminal device is paged. In other words, a terminal device that is not paged may receive the paging DCI even if there is no paging for the terminal device, and receive the paging message based on the scheduling information obtained from the paging DCI. Therefore, unnecessary PDSCH receiving and decoding are caused, and unnecessary power consumption is generated.

In view of this, a terminal device subgrouping mechanism (which is also referred to as a UE subgrouping (subgrouping) mechanism herein) is proposed. The terminal device subgrouping mechanism is used for paging a terminal device. Therefore, the terminal device subgrouping mechanism may also be referred to as a paging subgrouping (paging subgrouping) mechanism. A specific name of the terminal device subgrouping mechanism is not limited in embodiments of this application. A basic idea of the terminal device subgrouping mechanism includes: UEs that monitor a same PO are grouped, that is, the UEs in the same PO are grouped into different subgroups (subgroups), and an access network device indicates, through paging DCI or a PEI, related information of a subgroup (which is also referred to as a subgroup indication herein) to which currently paged UE belongs. When receiving the paging DCI or the PEI, the UE determines, based on the subgroup indication, whether the subgroup to which the UE belongs is currently paged. If the subgroup to which the UE belongs is currently paged, the UE receives paging. If the subgroup to which the UE belongs is not currently paged, the UE does not receive paging. It can be learned that the UE subgrouping mechanism can reduce unnecessary paging received by the UE, thereby reducing power consumption of the UE. For example, UE 1, UE 2, UE 3, UE 4, and UE 5 monitor a PO 1, and the five UEs on the PO 1 are grouped into three groups. For example, the UE 1 and the UE 2 are in a group (for example, a subgroup 1), the UE 3 and the UE 4 are in a group (for example, a subgroup 2), and the UE 5 is in a group (for example, a subgroup 3). If the UE 1 is currently paged, a subgroup indicated by the subgroup indication sent by the access network device is the subgroup 1. If the UE 1 and the UE 5 are currently paged, subgroups indicated by the subgroup indication sent by the access network device are the subgroup 1 and the subgroup 3. The UE 1 receives the subgroup indication, determines that the subgroup indicated by the subgroup indication is the subgroup 1, and receives paging. If the subgroup indicated by the subgroup indication is not the subgroup 1, the UE 1 does not receive paging.

Generally, there are two implementations for the UE subgrouping mechanism. In an implementation, UEs are grouped by a CN. It may also be considered as CN controlled subgrouping (CN controlled subgrouping) on the UEs. How the CN specifically groups the UEs is not limited in this specification. For example, the CN may group the UEs based on paging probabilities of the UEs. For another example, the CN may group the UEs based on energy consumption information of the UEs. Examples are not enumerated. In the other implementation, the UEs are grouped based on a UE identity (identity, ID). It may be considered as UE_ID based subgrouping (UE_ID based subgrouping) (referred to as UE ID subgrouping for short) on the UEs. UE ID subgrouping is a mechanism for determining, based on ID information of UE and a total number of subgroups sent by an access network device, a subgroup to which the UE belongs. For example, if a total number of UE ID subgroups is N, a UE subgroup ID (subgroup ID) may satisfy a formula: subgroup ID = UE_ID mod N. UE_ID may be related to an IMSI of the UE, for example, IMSI mod 1024, where the IMSI is an international mobile subscriber identity (international mobile subscriber identity), and each UE has a unique IMSI. In an LTE system, an IMSI of UE is fixed. An NR system supports allocating a 5G-globally unique temporary UE identity (globally unique temporary UE identity, GUTI) to a terminal device, and the 5G-GUTI includes a SG-temporary mobile subscription identifier (temporary mobile subscription identifier, TMSI) that uniquely identifies the terminal device. UE_ID may be related to a 5G-TMSI of UE. After grouping the UEs, the CN may send a subgroup ID of UE to the UE and the access network device. When the CN or the access network device needs to initiate paging on the UE, the CN or the access network device may indicate a subgroup of the UE in the paging indication information.

Because the CN determines grouping of UEs, policies for grouping the UEs by different CNs may be different. A shared cell may be associated with a plurality of CNs, and UEs controlled by different CNs may exist in the shared cell. In this case, the UEs of the different CNs may be in a subgroup corresponding to a same subgroup ID. For example, the shared cell is associated with a CN 1 and a CN 2. A subgroup ID subgroup ID allocated by the CN 1 to UE 1 with a low paging probability is 1. That is, the CN 1 allocates the UE with the low paging probability to a subgroup 1. A subgroup ID subgroup ID allocated by the CN 2 to UE 2 with a high paging probability is 1. That is, the CN 2 allocates the UE with the high paging probability to the subgroup 1. In this case, in the shared cell, a UE group whose subgroup ID is 1 includes both UE (for example, the UE 1) with a low paging probability and UE (for example, the UE 2) with a high paging probability. When the access network device or the core network device pages the UE 1 associated with the CN 1, the UE 2 associated with the CN 2 is also indicated to be paged. As a result, the UE 2 receives unnecessary paging. Therefore, in a shared cell scenario, the CN subgrouping mechanism has a problem of a paging false alarm. In addition, different CNs may have different policies for grouping UEs, and the CNs may mutually affect grouping of terminal devices. As a result, accuracy of grouping the UEs is reduced. In the foregoing example, UE in the subgroup 1 associated with the CN 2 is UE with a high paging probability, and is frequently paged by a network. The access network device or the core network device pages the UE in the subgroup 1 associated with the CN 2, and correspondingly, UE in the subgroup 1 associated with the CN 1 is frequently indicated to receive paging. However, the UE in the subgroup 1 associated with the CN 1 is originally UE with a low paging probability. As a result, associating the CN 1 with the subgroup 1 does not have a characteristic of a low paging probability, that is, subgrouping accuracy of the CN 1 is reduced.

In view of this, the technical solutions in embodiments of this application are provided. In the technical solutions provided in embodiments of this application, a terminal device can determine a terminal device group of a CN is paged. In other words, according to the solutions provided in embodiments of this application, UE subgroups controlled by a plurality of CNs can be distinguished. Therefore, a probability of causing a paging false alarm can be reduced.

The technical solutions provided in embodiments of this application may be applied to a 5G mobile communication system such as an NR system, may be applied to an LTE system, or may be applied to a next-generation mobile communication system or another similar communication system.

FIG. 2 show an example of a schematic diagram of an architecture of a communication system to which an embodiment of this application is applicable. The communication system may include at least two core network devices, an access network device, and at least one terminal device. In FIG. 2, an example in which the at least two core network devices are two core network devices, and the at least one terminal device is two terminal devices is used. The terminal device is connected to the access network device in a wireless manner, and the access network device is connected to the core network device in a wireless or wired manner. The core network device and the access network device may be independent and different physical devices. Alternatively, a function of the core network device and a logical function of the access network device are integrated on a same physical device. Alternatively, some functions of the core network device and some functions of the access network device are integrated on a same physical device. It should be noted that FIG. 2 is an example, and quantities of core network devices, access network devices, and terminal devices included in the mobile communication system are not limited in embodiments of this application. In some embodiments, the communication system may further include another network device, for example, a wireless relay device or a wireless backhaul device. In addition, the solutions provided in embodiments of this application are applied to a scenario shown in FIG. 1.

With reference to the accompanying drawings, the following separately describes five solutions provided in embodiments of this application.

The following uses an example in which four communication methods provided in embodiments of this application are applied to a network architecture shown in FIG. 2. In addition, the four communication methods may be respectively executed by two communication apparatuses, for example, a first communication apparatus and a second communication apparatus. The first communication apparatus and the second communication apparatus vary with different communication methods, and are described in the following. In the following description, an example in which a network shared cell is a first cell is used. It should be understood that the first cell may be associated with a plurality of PLMNs (or NPNs), that is, the first cell may be associated with a PLMN set. It may be considered that the first cell is associated with one or more CNs corresponding to the PLMN set. Alternatively, the first cell may be associated with a plurality of CNs, that is, the first cell may be associated with a CN set. In the following, an example in which the first cell is associated with the PLMN set is used. Unless otherwise specified, the PLMN set associated with the first cell is similar to the CN set associated with the first cell. That is, the PLMN set associated with the first cell may be considered as the PLMN set associated with the first cell. A PLMN associated with a terminal device may be a PLMN (a selected PLMN) selected by the terminal device (a non-access stratum).

First, a first communication method provided in embodiments of this application is described. The first communication method may be executed by the first communication apparatus and the second communication apparatus. The first communication apparatus may be an access network device or a communication apparatus that can support the access network device in implementing a function required by the method. Certainly, the first communication apparatus may be another communication apparatus, for example, a chip system. The second communication apparatus may be a terminal device or a communication apparatus that can support the terminal device in implementing a function required by the method. Certainly, the second communication apparatus may be another communication apparatus, for example, a chip system. Implementations of the first communication apparatus and the second communication apparatus are not limited. For example, the first communication apparatus may be an access network device, and the second communication apparatus is a terminal device. Alternatively, the first communication apparatus is a communication apparatus that can support an access network device in implementing a function required by the method, and the second communication apparatus is a terminal device.

For ease of description, an example in which the first communication method is performed by an access network device and a terminal device is used below. If embodiments of this application are applied to the network architecture shown in FIG. 2, the access network device described below may be an access network device in the network architecture shown in FIG. 2, and the terminal device described below may be a terminal device in the network architecture shown in FIG. 2. It should be noted that, in embodiments of this application, the access network device and the terminal device are merely used as an example.

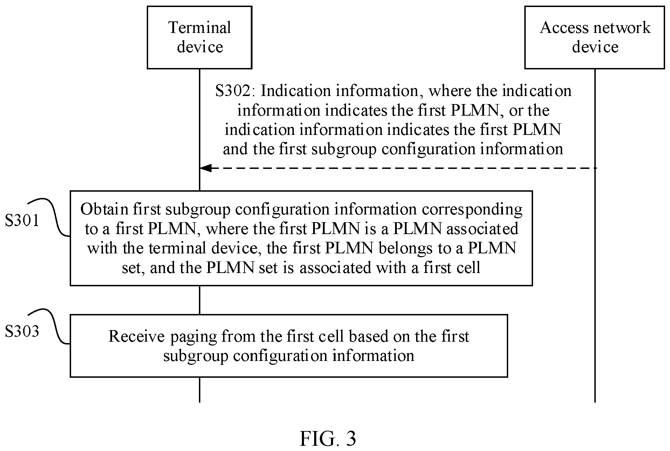

FIG. 3 is a schematic flowchart of the first communication method according to an embodiment of this application.

S301: A terminal device obtains first subgroup configuration information corresponding to a first PLMN, where the first PLMN is a PLMN associated with the terminal device, the first PLMN belongs to a PLMN set, and the PLMN set is associated with a first cell.

The first cell may be a network shared cell. It should be understood that the first cell may be associated with a plurality of PLMNs, in other words, the first cell is associated with the PLMN set. A PLMN associated with a terminal device located in the first cell may be a PLMN in the PLMN set. For example, a PLMN associated with UE 1 located in the first cell may be a PLMN 1 in the PLMN set, and a PLMN associated with UE 2 located in the first cell may be a PLMN 2 in the PLMN set. Subgroup configuration information may indicate a CN subgrouping mechanism (policy) corresponding to a terminal device associated with a PLMN, so that the terminal device determines, based on the subgroup configuration information, a subgroup ID for receiving paging from the first cell, and further determines whether to receive paging from the first cell. For example, subgroup configuration information 1 indicates a CN subgrouping mechanism (policy) of the UE 1 corresponding to the PLMN 1. Similarly, subgroup configuration information 2 may further indicate a CN subgrouping mechanism of the UE 2 corresponding to the PLMN 2. Optionally, subgroup configuration information corresponding to different PLMNs may be the same or different. For example, the first cell is associated with the PLMN 1 and the PLMN 2, and subgroup configuration information corresponding to the PLMN 1 and subgroup configuration information corresponding to the PLMN 2 may be the same or different. One or more CNs corresponding to the PLMN set associated with the first cell group terminal devices based on respective subgrouping policies. In addition, CNs associated with different PLMNs may be the same or different. Therefore, P PLMNs associated with the first cell may be associated with Z pieces of subgroup configuration information, where P is an integer greater than or equal to 2, and Z is an integer greater than or equal to 1.

In this specification, that the terminal device is associated with the first PLMN is used as an example. Before receiving paging, the terminal device may obtain the first subgroup configuration information corresponding to the first PLMN. Optionally, the first PLMN may be a PLMN indicated by PLMN information in system information. For example, the first PLMN is a 1st PLMN in an information element "PLMN-IdentityInfoList" included in the PLMN information or a PLMN in a first group of PLMNs. In this way, a PLMN associated with the first cell may be specified, and a CN subgrouping mechanism corresponding to the PLMN is supported by the first cell. When a PLMN associated with the terminal device is the specified PLMN, the terminal device may receive paging from the first cell by default by using the CN subgrouping mechanism corresponding to the specified PLMN. This is simple.

The first subgroup configuration information may indicate one or more of the following information, so that a terminal device 1 can determine, based on the first subgroup configuration information, a subgroup ID used by the terminal device 1 to receive paging from the first cell.

(1) The first subgroup configuration information may indicate a first correspondence (which is referred to as first information for short) between a first group number and a second group number, where the first group number is a subgroup ID used by the terminal device to receive paging from the first cell, and the second group number is a subgroup ID from a core network device. It should be noted that the second group number is a subgroup ID allocated by a second core network device to the terminal device, the core network device may send the second group number to the terminal device, or the core network device may send the second group number to an access network device, and the access network device receives the second group number and forwards the second group number to the terminal device. According to a current mechanism, when initiating paging, the core network device sends the second group number to the access network device, and the access network device sends paging indication information to indicate a terminal device group corresponding to the second group number. Different core network devices may allocate a same subgroup ID to terminal devices. In this case, if the first cell needs to page a terminal device controlled by a core network device associated with the first cell, a terminal device that has a same second group number and that is of another core network device associated with the first cell also receives paging. As a result, unnecessary paging receiving is caused.

However, in embodiments of this application, the first subgroup configuration information is subgroup configuration information corresponding to the first PLMN associated with the terminal device. The access network device receives the second group number allocated by the core network device to the terminal device, and the access network device may determine, based on the first correspondence between the first group number and the second group number, the first group number used by the terminal device to receive paging from the first cell. That is, the access network device sends the paging indication information to indicate a terminal device group corresponding to the first group number. For the terminal device, the terminal device may alternatively determine, based on the second group number and the first correspondence between the first group number and the second group number, the first group number used by the terminal device to receive paging from the first cell. That is, although a subgroup ID allocated by the core network device to the terminal device is the second group number, a subgroup ID carried in the paging indication information sent by the access network device is the first group number. According to this solution, even if different CNs associated with the first cell allocate a same subgroup ID to terminal devices, subgroup IDs actually used by the access network device to initiate paging on the terminal devices associated with the different CNs are different. Therefore, a probability of causing a paging false alarm can be reduced.

An implementation of the correspondence between the first group number and the second group number is not limited in embodiments of this application. For example, the correspondence may be implemented in the following one or more manners. Hereinafter, the first group number is represented by ID, the second group number is represented by k, and mod represents a modulo operation.

Implementation 1: The first group number and the second group number satisfy: $ID = k \bmod (n2 - n1 + 1) + n1$, where a value range of the first group number is [n1, n2]. [n1, n2] may be considered as a range of a subgroup ID corresponding to a CN/PLMN/NPN associated with the terminal device on an access network side. In other words, the terminal device may map, according to $ID = k \bmod (n2 - n1 + 1) + n1$, the second group number k allocated by the core network device to the terminal device to a value in [n1, n2], and use the value as the first group number. It may be understood that k may be sent by the core network device to the terminal device, or may be sent by the core network device to the access network device, and the access network device forwards k to the terminal device, n1 and n2 may be sent to the terminal device by the access network device or the core network device. In addition, n1 and n2 may be the same or different. This is not limited in embodiments of this application. In this implementation, the first subgroup configuration information may include the value range of the first group number, that is, n1 and n2.

Implementation 2: The first group number and the second group number satisfy: $ID = k + M$. M is an offset value between the first group number and the second group number, and may also be considered as an offset of a subgroup ID corresponding to a CN/PLMN/NPN associated with the terminal device on an access network side relative to a subgroup ID allocated by the core network device to the terminal device. In other words, the terminal device may use, according to $\text{Subgroup ID} = k + M$, a subgroup ID obtained by offsetting the second group number k allocated by the core network device to the terminal device by M as the first group number. M may be predefined, preconfigured, or configured by the access network device or the core network device. In this implementation, the first subgroup configuration information may include M.

Implementation 3: The terminal device may re-determine a subgroup ID of the terminal device on an access network side based on a total number of subgroups corresponding to a PLMN associated with the terminal device on the access network side and/or a total number of subgroups corresponding to another PLMN on the access network side.

For example, it is assumed that a subgroup ID allocated by the core network device to the terminal device is k, and the first PLMN associated with the terminal device is a 1st PLMN in PLMNs associated with the first cell, the terminal device may determine, according to $ID = k$, that the first group number is the second group number k.

For another example, it is assumed that a subgroup ID allocated by the core network device to the terminal device is k, the first PLMN associated with the terminal device is a 2nd PLMN in PLMNs associated with the first cell, and a total number of subgroups that are in the first cell and that correspond to a 1st PLMN in the PLMNs associated with the first cell is M1, the terminal device may determine, according to $ID = k + M1$, that the first group number is a sum of the second group number k and M1.

It should be noted that a 1st PLMN in a plurality of PLMNs associated with the first cell is relative to the subgroup configuration information. For example, a plurality of PLMNs one-to-one correspond to a plurality of pieces of subgroup configuration information, the plurality of pieces of subgroup configuration information are sorted in sequence, and a PLMN corresponding to a first piece of subgroup configuration information is the 1st PLMN in the plurality of PLMNs.

Implementation 4: The correspondence between the second group number and the first group number meets a mapping rule, for example, may indicate a correspondence between the second group number of the terminal device corresponding to the PLMN associated with the first cell and the first group number. One or more second group numbers may correspond to one first group number. For example, PLMNs associated with the first cell may be sorted in sequence, and second group numbers corresponding to the PLMNs associated with the first cell are numbered in a sorting sequence, so that terminal devices controlled by different CNs in the first cell have different subgroup IDs on an access network side.

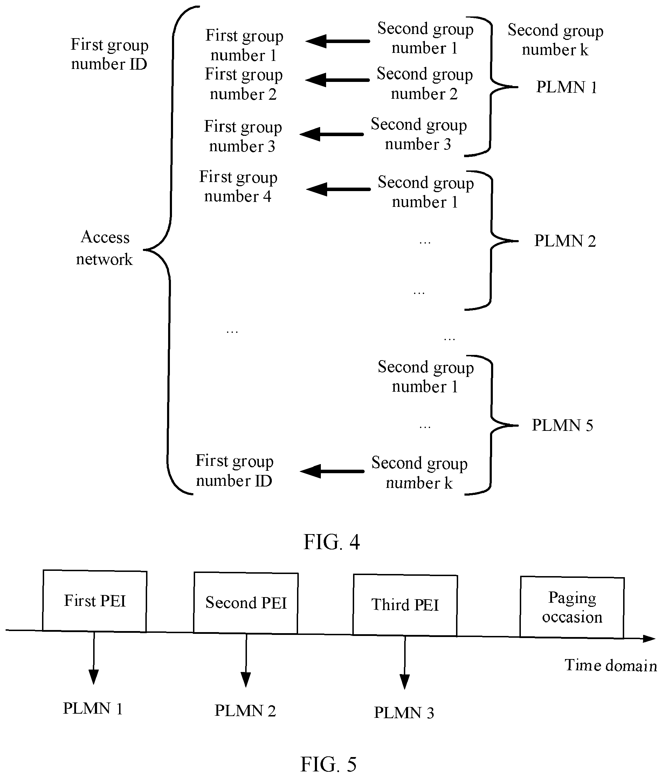

For example, FIG. 4 shows a mapping rule between the second group number and the first group number. In FIG. 4, an example in which the first cell is associated with five PLMNs is used. Second group numbers corresponding to the five PLMNs are sequentially renumbered to obtain first group numbers. It can be learned from FIG. 4 that terminal devices in the five PLMNs associated with the first cell have different subgroup IDs on the access network side.

The terminal device determines, by using the correspondence between the first group number and the second group number (that is, the first information), the subgroup ID of the terminal device on the access network side, and the subgroup ID may be used by the terminal device to distinguish which CN/PLMN/NPN is paged. Therefore, a probability of causing a paging false alarm can be reduced.

(2) The first subgroup configuration information may indicate information about a first PEI (which is referred to as second information for short).

Different from a case in which the terminal device determines paging is performed for which CN/PLMN/NPN, in embodiments of this application, information about a PEI may be used to determine paging is performed for which CN/PLMN/NPN. Different PLMNs may correspond to information about different PEIs, so that a terminal device in each PLMN determines, based on a corresponding PEI, whether paging sent by the access network device or the core network device is directed to the terminal device. That is, according to this solution, paging indication information of different CNs/PLMNs/NPNs is different, so that the terminal device may determine, based on a PEI corresponding to a CN/PLMN/NPN to which the terminal device belongs, whether the terminal device is indicated to receive paging. This avoids receiving paging indication information from another irrelevant CN/PLMN/NPN, and reduces a probability of causing a paging false alarm.

In embodiments of this application, the information about the PEI is implemented in a plurality of manners, and the information about the first PEI is used as an example. The information about the first PEI may be implemented in the following two manners.

Implementation 1: The information about the first PEI may be a first PEI, and different PEIs may correspond to different CNs/PLMNs/NPNs. That is, different PEIs (sequences or signals) indicate different CNs/PLMNs/NPNs. For example, the first cell is associated with three PLMNs: a PLMN 1, a PLMN 2, and a PLMN 3. The first PEI corresponds to the PLMN 1, a second PEI corresponds to the PLMN 2, and a third PEI corresponds to the PLMN 3. If the terminal device is associated with the first PLMN 1, the terminal device determines that the access network device sends the first PEI, and the terminal device receives paging. Optionally, PEIs corresponding to different CNs/PLMNs/NPNs may be the same or different.

Implementation 2: The information about the first PEI may be configuration information of the first PEI, and different PEIs may correspond to different CNs/PLMNs/NPNs. Optionally, configuration information of PEIs corresponding to different CNs/PLMNs/NPNs may be the same or different. The configuration information of the first PEI is used as an example. The configuration information of the first PEI may include one or more of the following information: a search space (search space) configuration of the first PEI, a control resource set (control resource set, CORESET) configuration of the first PEI, or a time frequency resource location for monitoring the first PEI, for example, a time domain resource location for monitoring the first PEI and/or a frequency domain resource location for monitoring the first PEI.

The frequency domain resource location for monitoring the first PEI may include information such as a frequency domain start location and/or a frequency domain resource size of the first PEI. The time frequency resource location for monitoring the first PEI may include one or more of the following configurations:

(1) start location configuration that is used to determine start time for monitoring the first PEI. The start location configuration may be an offset value between the start time for monitoring the first PEI and start time of a PO associated with the first PEI. Alternatively, the start location configuration may be an offset value between the start time for monitoring the first PEI and a synchronization signal block (synchronization signal block, SSB) or an SSB burst (SSB burst);

(2) end location configuration that is used to determine end time for monitoring the first PEI. The end location configuration may be an offset value between the end time for monitoring the first PEI and start time of a PO associated with the first PEI. Alternatively, the end location configuration may be an offset value between the end time for monitoring the first PEI and an SSB. Alternatively, the end location configuration may be an offset value between the end time for monitoring the first PEI and an SSB burst;

(3) duration configuration that is used to determine duration for monitoring the first PEI. One or more single PEI monitoring occasions (monitoring occasions) are included in duration. The configuration may be in a unit of an absolute time length such as a millisecond (ms)/second (s), may be in a unit of a frame (frame), a subframe (subframe), a slot (slot), a symbol (symbol), or the like, or may be in a unit of a PDCCH monitoring occasion (for example, L PDCCH monitoring occasions, where L is a positive number);

(4) time length configuration of a monitoring occasion; The configuration is used to determine a length of a single PEI monitoring occasion. The configuration may be in a unit of an absolute time length such as a millisecond (ms)/second (s), or may be in a unit of a frame (frame), a subframe (subframe), a slot (slot), a symbol (symbol), or the like; and

(5) interval (or cycle) configuration of a monitoring occasion. The configuration is used to determine a time interval between single PEI monitoring occasions or an occurrence cycle of single PEI monitoring occasions. The configuration may be in a unit of an absolute time length such as a millisecond (ms)/second (s), or may be in a unit of a frame (frame), a subframe (subframe), a slot (slot), a symbol (symbol), or the like.

In this implementation, configuration information of PEIs separately indicates different PLMNs. Configuration information of PEIs corresponding to different PLMNs may be the same or different. The terminal device may determine, based on an associated PLMN, a time domain resource location and/or a frequency domain resource location for monitoring a PEI, and then determine, based on the monitored PEI, whether to receive paging from the first cell. For example, FIG. 5 is a schematic diagram of a correspondence between configuration information of a PEI and a PLMN. In FIG. 5, an example in which the configuration information of the PEI indicates a time domain resource location for monitoring the PEI is used. Optionally, frequency domain resource locations for monitoring the PEI may be the same or different. The first cell is associated with three PLMNs: a PLMN 1, a PLMN 2, and a PLMN 3. The first PEI corresponds to the PLMN 1, a second PEI corresponds to the PLMB 2, and a third PEI corresponds to the PLMN 3. Subgroup configuration information corresponding to the PLMN 1 is the first subgroup configuration information, subgroup configuration information corresponding to the PLMN 2 is second subgroup configuration information, and subgroup configuration information corresponding to the PLMN 3 is third subgroup configuration information. If the terminal device is associated with the first PLMN 1, the terminal device may determine that the first subgroup configuration information is the configuration information of the first PEI, monitor the first PEI based on the configuration information of the first PEI, and then determine, based on the monitored first PEI, whether to receive paging from the first cell. For example, if the first PEI indicates not to receive paging, the terminal device may not receive paging. If the first PEI indicates to receive paging, the terminal device receives paging.

(3) The first subgroup configuration information may indicate subgroup indication configuration information (which is referred to as third information for short) that is used to determine a location of a first indication in the paging indication information, where the first indication corresponds to a terminal device group to which the terminal device is located, or the first indication may be understood as a subgroup indication of the terminal device. The first indication may indicate whether to monitor paging. For example, the first indication indicates whether to monitor a PDCCH corresponding to the terminal device group. For example, the first indication is information that occupies 1 bit, a value "0" of the first indication may indicate to monitor the PDCCH corresponding to the terminal device group, and correspondingly, a value "1" of the first indication may indicate not to monitor the PDCCH corresponding to the terminal device group. Alternatively, a value "0" of the first indication may indicate not to monitor the PDCCH corresponding to the terminal device group, and correspondingly, a value "1" of the first indication may indicate to monitor the PDCCH corresponding to the terminal device group. The terminal device may determine, based on the first indication, to receive the paging indication information or to receive a paging message carried on the PDSCH. The paging indication information may be considered as paging indication information sent by the access network device. Different PLMNs may correspond to different subgroup indications. For example, it is assumed that a subgroup ID allocated by a CN associated with the first PLMN to the terminal device is k, and a subgroup indication corresponding to the first PLMN associated with the terminal device indicates that the subgroup indication of the first PLMN starts from an $n^{th}$ bit in the paging indication information. In this case, a location of the subgroup indication of the terminal device in the paging indication information may be in an $(n + (k - 1))^{th}$ bit.

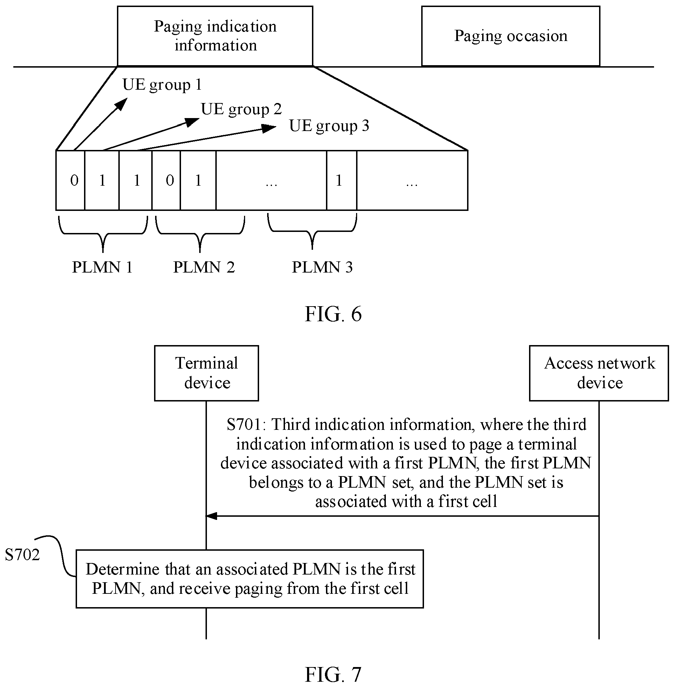

For example, FIG. 6 is a schematic diagram of a correspondence between subgroup indication configuration information and a PLMN. As shown in FIG. 6, the paging indication information may be a PEI, the PEI may include subgroup indications corresponding to a plurality of PLMNs, one subgroup indication corresponds to one terminal device group, and subgroup indications of different PLMNs have different start locations in the paging indication information. For example, a PLMN 1 corresponds to 3 bits, and one bit represents one subgroup indication, and one subgroup indication corresponds to one terminal device group. That a start location of a PEI is a first bit is used as an example. For example, a start location of subgroup indication configuration information corresponding to the PLMN 1 in the PEI is in a first bit, that is, n = 1, and a start location of a subgroup indication corresponding to a PLMN 2 in the PEI is in a fourth bit, that is, n = 4. It is assumed that a subgroup ID allocated by a CN corresponding to the PLMN 1 to the terminal device is 2, that is, k = 2, and the access network device or the core network device sends the paging indication information, to page the terminal device associated with the CN corresponding to the PLMN 1. In this case, the first subgroup configuration information may indicate that a start location of a subgroup indication is 2, that is, 1 + (2 - 1), and a start location of the subgroup indication corresponding to the PLMN 1 in the paging indication information is in a second bit. The terminal device determines, based on the first subgroup configuration information, that a start location of a subgroup indication corresponding to the terminal device in the paging indication information is 1 + (2 - 1), that is, in the second bit. If a value of the second bit shown in FIG. 6 is "1", the terminal device may monitor the PDCCH corresponding to the terminal device group, and receive paging from the first cell. In other words, the terminal device may determine, based on a PLMN to which the terminal device belongs, locations in the paging indication information to monitor the paging indication information, to determine whether to monitor the PDCCH corresponding to the terminal device group in which the terminal device is located. This avoids monitoring the paging indication information in another irrelevant PLMN. Therefore, a probability of causing a paging false alarm can be reduced.

(4) The first subgroup configuration information indicates whether the first cell supports a CN subgrouping mechanism used for the first PLMN (which is also referred to as fourth information in this specification). It may also be understood as whether the first cell enables or uses the CN subgrouping mechanism for the first PLMN. If the first cell does not support the CN subgrouping mechanism used for the first PLMN, the terminal device does not use a subgroup ID allocated by a CN associated with the first PLMN to the terminal device to receive paging from the first cell. If the first cell supports the CN subgrouping mechanism used for the first PLMN, the terminal device may determine, based on one or more of the first information, the second information, and the third information, whether to receive paging from the first cell and how to receive paging from the first cell.

It may be understood that, one WUS is associated with one or more POs, and similarly, subgroup configuration information may also be associated with one or more POs. For details, refer to related content of the foregoing WUS. Details are not described herein again.

In embodiments of this application, CN subgrouping mechanisms controlled by different CNs/PLMNs/NPNs are distinguished by using subgroup configuration information corresponding to the CNs/PLMNs/NPNs, so that during CN subgroup-based paging, the terminal device may determine whether paging from the access network device or the core network device is paging in a CN/PLMN/NPN to which the terminal device belongs, to avoid receiving paging in another CN/PLMN/NPN. Therefore, a probability of causing a paging false alarm can be reduced. In addition, subgroups that are of terminal devices and that are grouped by different CNs/PLMNs/NPNs can be distinguished. Therefore, terminal devices controlled by a plurality of CNs/PLMNs/NPNs can be paged simultaneously, that is, the paging indication information is sent once, and the terminal devices controlled by the plurality of CNs/PLMNs/NPNs can be paged. This reduces signaling overheads of paging the terminal devices controlled by the plurality of CNs/PLMNs/NPNs. Moreover, the subgroups that are of the terminal devices and that are grouped by different CNs/PLMNs/NPNs may be distinguished by using information about PEIs. In this case, each PEI corresponds to one CN/PLMN/NPN, and a number of available subgroups in the CN subgrouping mechanism may reach a maximum value supported by the access network device, to support as many UE subgroups as possible and enhance effect of the subgrouping mechanism.

Subgroup configuration information corresponding to PLMNs/NPNs/CNs associated with a cell may be the same or different. In embodiments of this application, the cell may send subgroup configuration information of each PLMN/NPN/CN in the cell, so that the terminal device may determine to use subgroup configuration information corresponding to a PLMN/NPN/CN associated with the terminal device. For example, the terminal device associated with the first PLMN obtains the first subgroup configuration information corresponding to the first PLMN.

For a PLMN associated with the first cell, the first cell may send subgroup configuration information corresponding to the PLMN associated with the first cell. For example, the first cell may broadcast the subgroup configuration information corresponding to the associated PLMN. The terminal device receives the broadcast from the first cell, and may determine corresponding first subgroup configuration information based on the first PLMN associated with the terminal device and the subgroup configuration information that corresponds to the associated PLMN and that is broadcast by the first cell.

Example 1: For a PLMN associated with the first cell, the first cell may broadcast subgroup configuration information corresponding to the PLMN associated with the first cell. The PLMN associated with the first cell may be represented by using an identity (identity) or an index of the PLMN. The identity of the PLMN may be an identity including mobile country code (mobile country code, MCC) and mobile network code (mobile network code, MNC). The index of the PLMN may be an index allocated by the access network device. For example, the first cell is associated with three PLMNs, and the access network device may allocate indexes 1, 2, and 3 to the three PLMNs, to respectively identify the three PLMNs. Indexes of different PLMNs may be the same or different. It should be noted that whether subgroup configuration information corresponding to a PLMN/NPN associated with the first cell and subgroup configuration information corresponding to each PLMN are carried in one piece of signaling is not limited in embodiments of this application. In other words, the subgroup configuration information corresponding to the PLMN associated with the first cell and the subgroup configuration information corresponding to each PLMN may be carried in one piece of signaling, or may be carried in a plurality of pieces of signaling. For example, system information broadcast by the first cell may include the identity (or the index) of the PLMN associated with the first cell and the subgroup configuration information corresponding to each PLMN.

For example, for the first cell, the system information may include an information element "PLMN-CNSubgroupingInfoList" that indicates each PLMN associated with the first cell and the subgroup configuration information corresponding to each PLMN. The "PLMN-CNSubgroupingInfoList" may include at least one piece of "PLMN-CNSubgroupingInfo", and the "PLMN-CNSubgroupingInfo" includes an identity (that is, PLMN-Identity) corresponding to one PLMN and subgroup configuration information (CNControlledSubgroupingInfo) corresponding to the PLMN. It should be understood that a maximum number of the "PLMN-CNSubgroupingInfo" is a maximum number of PLMNs associated with the first cell. For example, an implementation of the "PLMN-CNSubgroupingInfoList" may be:

```
        PLMN-CNSubgroupingInfoList ::=      SEQUENCE (SIZE (1..maxPLMN)) OF PLMN-
CNSubgroupingInfo

        PLMN-CNSubgroupingInfo ::=          SEQUENCE {
        plmn-Identity                       PLMN-Identity,

            CNControlledSubgroupingInfo         CNControlledSubgroupingInfo

            }
```

It should be noted that, for a plurality of PLMNs with same subgroup configuration information, each PLMN/NPN in the plurality of PLMNs may correspond to one piece of subgroup configuration information, or the plurality of PLMNs correspond to one piece of subgroup configuration information. For example, it is assumed that a PLMN 1 and a PLMN 2 correspond to subgroup configuration information 1, and a PLMN 3 corresponds to subgroup configuration information 2. In this case, the PLMN-CNSubgroupingInfoList may include three items of PLMN-CNSubgroupingInfo, and the three items of PLMN-CNSubgroupingInfo respectively correspond to the PLMN 1, the PLMN 2, and the PLMN 3. Alternatively, the PLMN-CNSubgroupingInfoList includes two items of PLMN-CNSubgroupingInfo, where one item of PLMN-CNSubgroupingInfo corresponds to the PLMN 1 and the PLMN 2 (that is, the item of PLMN-CNSubgroupingInfo includes identities corresponding to the PLMN 1 and the PLMN 2), and the other item of PLMN-CNSubgroupingInfo corresponds to the PLMN 3. The terminal device receives the broadcast from the first cell, and may determine corresponding CNControlledSubgroupingInfo, that is, the first subgroup configuration information, based on the first PLMN associated with the terminal device and the PLMN-CNSubgroupingInfoList.

Example 2: For a CN associated with the first cell, the first cell may broadcast subgroup configuration information corresponding to the CN associated with the first cell, to indicate a PLMN/NPN associated with the CN. One CN may be associated with one or more PLMNs/NPNs. In this example, it may be considered that the subgroup configuration information broadcast by the first cell is for the CN associated with the first cell and/or the PLMN/NPN corresponding to the CN associated with the first cell. The first cell may broadcast an identity of the associated CN and subgroup configuration information corresponding to each CN. Alternatively, the first cell may broadcast identities of one or more PLMNs/NPNs corresponding to the associated CN, and subgroup configuration information corresponding to the one or more PLMNs/NPNs corresponding to the associated CN. The identity of the CN associated with the first cell and the subgroup configuration information corresponding to each CN may be carried in one piece of signaling, or may be carried in a plurality of pieces of signaling. For example, a system message broadcast by the first cell may include the identity (or an index) of the CN associated with the first cell and the subgroup configuration information corresponding to each CN.

For example, for the first cell, the system message may include an information element "CNSubgroupingInfoList" that indicates each CN associated with the first cell and the subgroup configuration information corresponding to each CN. The "CNSubgroupingInfoList" may include at least one "CNSubgroupingInfo", and each piece of "CNSubgroupingInfo" includes an identity (that is, CN-Identity) corresponding to one CN and subgroup configuration information (CNControlledSubgroupingInfo) corresponding to the CN. Alternatively, each piece of "CNSubgroupingInfo" includes identities (plmn-IdentityList) of one or more PLMNs/NPNs associated with one CN and subgroup configuration information (CNControlledSubgroupingInfo) corresponding to the one or more PLMNs/NPNs associated with the CN. A maximum number of "CNSubgroupingInfo" is a maximum number of CNs associated with the first cell. For example, an implementation of the "CNSubgroupingInfoList" may be:

```
        CNSubgroupingInfoList ::=       SEQUENCE (SIZE (1..maxCN)) OF CNSubgroupingInfo
        CNSubgroupingInfo ::=           SEQUENCE {
        cn-Identity             CN-Identity,
        CNControlledSubgroupingInfo         CNControlledSubgroupingInfo
            }
```

For another example, another implementation of the "CNSubgroupingInfoList" may be:

```
CNSubgroupingInfoList ::=        SEQUENCE (SIZE (1..maxCN)) OF CNSubgroupingInfo
CNSubgroupingInfo ::=            SEQUENCE {
plmn-IdentityList                    SEQUENCE (SIZE (1..maxPLMN)) OF PLMN-Identity,
CNControlledSubgroupingInfo          CNControlledSubgroupingInfo
}
```

For a plurality of CNs with same subgroup configuration information, each of the plurality of CNs may correspond to one piece of subgroup configuration information, or the plurality of CNs correspond one piece of subgroup configuration information. For example, it is assumed that a CN 1 and a CN 2 correspond to subgroup configuration information 1, and a CN 3 corresponds to subgroup configuration information 2. In this case, the CNSubgroupingInfoList may include three items of CNSubgroupingInfo, and the three items of CNSubgroupingInfo respectively correspond to the CN 1, the CN 2, and the CN 3. Alternatively, the CNSubgroupingInfoList includes two items of CNSubgroupingInfo, where one item of CNSubgroupingInfo corresponds to the CN 1 and the CN 2 (that is, the item of CNSubgroupingInfo includes identities corresponding to the CN 1 and the CN 2), and the other item of CNSubgroupingInfo corresponds to the CN 3. The terminal device receives the broadcast from the first cell, and may determine corresponding CNControlledSubgroupingInfo, that is, the first subgroup configuration information, based on a first CN associated with the terminal device and the CNSubgroupingInfoList.

S302: The access network device (or the core network device) sends indication information to the terminal device, and correspondingly, the terminal device receives the indication information from the access network device (or the core network device), where the indication information indicates the first PLMN, or the indication information indicates the first PLMN and the first subgroup configuration information.

The access network device or the core network device may configure corresponding subgroup configuration information for one or more PLMNs associated with the first cell. Optionally, subgroup configuration information corresponding to different PLMNs may be the same or different. The access network device or the core network device may indicate, by using the indication information, the terminal device to configure the corresponding subgroup configuration information for the one or more PLMNs associated with the first cell. The terminal device may determine, based on an indication of the indication information, to-be-used subgroup configuration information.

In an example, a correspondence between a PLMN and subgroup configuration information may be predefined or preconfigured. In this case, the access network device or the core network device may indirectly indicate subgroup configuration information by using identification information of the PLMN. For example, the indication information indicates the first PLMN, and the indication information may include identification information of the first PLMN. The terminal device may obtain, based on the first PLMN indicated by the indication information, the first subgroup configuration information corresponding to the first PLMN. The terminal device may determine, based on the first PLMN and the first subgroup configuration information, whether to receive paging from the first cell by using the CN subgrouping mechanism, that is, determine whether to receive paging from the first cell by using the subgroup ID allocated by the CN associated with the first PLMN to the terminal device.

For example, the first cell may broadcast the indication information, and the indication information indicates a PLMN 1, a PLMN 2, and a PLMN 3. That the PLMN 1, the PLMN 2, and the PLMN 3 correspond to subgroup configuration information 1 may be predefined or preconfigured in a protocol. If UE 1 is associated with the PLMN 1, UE 2 is associated with the PLMN 2, and UE 3 is associated with a PLMN 5, the UE 1 and the UE 2 receive paging from the first cell based on the subgroup configuration information 1, and the UE 3 does not use the subgroup configuration information 1 to receive paging from the first cell.

In another example, the indication information may indicate the first PLMN and the first subgroup configuration information. The terminal device associated with the first PLMN may determine the first subgroup configuration information based on the indication information, to receive paging from the first cell based on the first subgroup configuration information.

The access network device and the core network device may indicate, by using the indication information, subgroup configuration information corresponding to one or more PLMNs. This is flexible. For example, the first cell may broadcast first information, and the first information indicates a PLMN 1, a PLMN 2, and a PLMN 3. The first cell may further broadcast second information, and the second information may indicate subgroup configuration information 1. In this case, the terminal device may consider that the PLMN 1, the PLMN 2, and the PLMN 3 correspond to the subgroup configuration information 1 by default. If UE 1 is associated with the PLMN 1, UE 2 is associated with the PLMN 2, and UE 3 is associated with a PLMN 5, the UE 1 and the UE 2 receive paging from the first cell based on the subgroup configuration information 1, and the UE 3 does not use the subgroup configuration information 1 to receive paging from the first cell. It should be noted that in embodiments of this application, a number of PLMNs indicated by the first information is not limited, and a number of pieces of subgroup configuration information indicated by the second information is not limited. If the first indication information indicates a plurality of PLMNs, and the second information indicates the subgroup configuration information 1, the plurality of PLMNs correspond to the subgroup configuration information 1. If the first indication information indicates R PLMNs, and the second information indicates S pieces of subgroup configuration information, a mapping relationship between R and S may be agreed upon, provided that the terminal device can determine a correspondence between a PLMN and subgroup configuration information.

The first information and the second information may be carried in one piece of signaling. For example, the first information and the second information are carried in the indication information. For example, the indication information may indicate the first PLMN and the first subgroup configuration information corresponding to the first PLMN. Alternatively, the first information and the second information may be carried in different signaling.

It should be noted that S302 is an optional step, that is, S302 is not a mandatory step. Therefore, in FIG. 3, S302 is illustrated in a dashed line.

S303: The terminal device receives paging from the first cell based on the first subgroup configuration information.

After obtaining the first subgroup configuration information, the terminal device receives paging from the first cell based on the first subgroup configuration information. Based on different implementations of the first subgroup configuration information, a manner in which the terminal device receives paging from the first cell based on the first subgroup configuration information also varies.

Example 1: The first subgroup configuration information indicates the correspondence between the first group number and the second group number. In this case, the terminal device may determine the first group number based on the first subgroup configuration information and the second group number allocated by a CN to the terminal device. If the paging indication information sent by the access network device indicates a terminal device group corresponding to the first group number, the terminal device receives paging from the first cell. For example, the terminal device determines that a subgroup ID indicated by the paging indication information matches the first group number determined by the terminal device based on the correspondence, that is, the subgroup ID indicated by the paging indication information includes the first group number determined by the terminal device based on the correspondence. In this case, it may be considered that the paging indication information is used to page a terminal device group to which the terminal device belongs, and the terminal device receives paging. If the paging indication information does not indicate a terminal device group corresponding to the first group number, the terminal device determines that paging is neither for the first PLMN nor for a terminal device group to which the terminal device belongs. In this case, the terminal device may not receive paging.

Example 2: The first subgroup configuration information indicates the information about the first PEI. For example, the first subgroup configuration information indicates the first PEI, or the first subgroup configuration information indicates configuration information of the first PEI. In this case, it may be considered that the paging indication information sent by the network device is the first PEI. The terminal device determines, based on a received or monitored first PEI, whether to receive paging from the first cell. If the first PEI indicates to receive paging, the terminal device receives paging, or if the first PEI indicates not to receive paging, the terminal device does not receive paging.

Example 3: The first subgroup configuration information indicates the subgroup indication configuration information. In this case, the terminal device may determine, based on the subgroup indication configuration information, to obtain a location that is in the paging indication information and that is of a first indication corresponding to a terminal device group in which the terminal device is located, to determine, based on the received first indication, whether to monitor paging. For example, the terminal device determines, based on the first indication, whether to monitor a PDCCH corresponding to the terminal device group in which the terminal device is located. Alternatively, the terminal device determines whether the terminal device needs to receive paging, and further determines whether to receive paging from the first cell, or determines how to receive paging from the first cell. For example, if the first indication indicates to receive paging, the terminal device receives paging, or if the first indication indicates not to receive paging, the terminal device does not receive paging.

Example 4: The first subgroup configuration information indicates whether the first cell supports the CN subgrouping mechanism used for the first PLMN. If the first subgroup configuration information indicates that the first cell supports the CN subgrouping mechanism used for the first PLMN, the terminal device may receive paging based on a subgroup ID allocated by a CN to the terminal device. For example, the CN subgrouping mechanism that is used for the first PLMN and that is supported by the first cell is predefined or preconfigured, and the terminal device receives paging according to the CN subgrouping mechanism. If the first subgroup configuration information indicates that the first cell does not support the CN subgrouping mechanism used for the first PLMN, the terminal device does not use a subgroup ID allocated by a CN to the terminal device to receive paging. In this case, the terminal device may receive paging based on the subgroup ID allocated by the CN, and one or more of the first information, the second information, and the third information indicated by the first subgroup configuration information. For example, the terminal device may determine, based on the first information, whether the paging indication information sent by the access network device is for the first PLMN. If the paging indication information is for the first PLMN, the terminal device may receive paging based on the subgroup ID allocated by the CN and the first information. If the paging indication information sent by the network device is not for the first PLMN, the terminal device does not receive paging.

It should be understood that in Example 1 to Example 4, if the paging indication information sent by the access network device further indicates a to-be-paged terminal device group, the terminal device determines that the paging indication information is for the first PLMN, further needs to determine that the terminal device belongs to the terminal device group indicated by the paging indication information, and receives paging from the first cell. Otherwise, the terminal device determines that the paging indication information is for the first PLMN, but the terminal device belongs to the terminal device group indicated by the paging indication information, and the terminal device does not monitor paging in the first cell.

In the foregoing first communication method, CN subgrouping mechanisms of different CNs/PLMNs/NPNs are distinguished by using subgroup configuration information corresponding to the CNs/PLMNs/NPNs, so that during CN subgroup based paging, the terminal device may determine whether paging from the access network device is for a CN/PLMN/NPN to which the terminal device belongs, to avoid receiving paging in another CN/PLMN/NPN. Therefore, a probability of causing a paging false alarm can be reduced.

In an alternative implementation, an embodiment of this application provides a second communication method. A difference from the first communication method lies in that a CN/PLMN/NPN that is currently paged may be indicated by using paging indication information in the second communication method. A terminal device associated with the CN/PLMN/NPN indicated by the paging indication information receives paging, and a terminal device that is not associated with the CN/PLMN/NPN indicated by the paging indication information may not receive paging. That is, a terminal device associated with one CN/PLMN/NPN does not receive paging in another CN/PLMN/NPN. Therefore, a probability of causing a paging false alarm can be reduced.

Similar to the first communication method, the second communication method may be performed by a first communication apparatus and a second communication apparatus. For descriptions of the first communication apparatus and the second communication apparatus, refer to related content of the foregoing first communication method. Details are not described herein again. For ease of description, an example in which the second communication method is performed by an access network device and a terminal device is used below.

FIG. 7 is a schematic flowchart of a second communication method according to an embodiment of this application.

S701: An access network device (or a core network device) sends third indication information, and correspondingly, a terminal device receives first indication information, where the third indication information is used to page a terminal device associated with a first PLMN, the first PLMN belongs to a PLMN set, and the PLMN set is associated with a first cell. It may be understood that if the core network device pages the terminal device associated with the first PLMN, the core network device triggers the access network device to send the first indication information. This may also be considered that the core network device sends the third indication information.

The third indication information may be carried in paging DCI, a PEI, or DCI. In other words, paging indication information sent by the access network device may indicate the first PLMN.

For example, the third indication information may include an identity or an index of the first PLMN. Alternatively, the first indication information may include an identity or an index of a CN associated with the first PLMN.

For example, the third indication information is a first PEI, and the first PEI corresponds to the first PLMN. In this case, a correspondence between a PEI and a PLMN may be defined, and the first PLMN may be indicated by using the first PEI. PEIs corresponding to different PLMNs may be the same or different.

In addition, the access network device may further indicate a terminal device group that is currently paged. For example, the access network device may further send fourth indication information, and the terminal device receives the fourth indication information, where the fourth indication information may indicate a first terminal device group, to indicate to page a terminal device belonging to the first terminal device group.

The third indication information and the fourth indication information may be carried in one piece of signaling. For example, both the third indication information and the fourth indication information may be carried in paging DCI, a PEI, or DCI. Alternatively, the third indication information and the fourth indication information may be carried in two pieces of signaling. For example, the third indication information is the first PEI, and the fourth indication information may be carried in the paging DCI. For another example, the third indication information is the first PEI (DCI), and the fourth indication information is a second PEI (DCI).

S702: The terminal device determines that an associated PLMN is the first PLMN, and the terminal device receives paging from the first cell.

The terminal device receives the third indication information, and may determine, based on the third indication information, that the access network device or the core network device pages the terminal device associated with the first PLMN. If the terminal device determines that the associated PLMN is the first PLMN, the terminal device receives paging. If the terminal device determines that the associated PLMN is not the first PLMN, the terminal device may not receive paging. It should be understood that if the terminal device further receives the fourth indication information, the terminal device determines that the terminal device belongs to the first terminal device group, and the terminal device receives paging. If the terminal device determines that the terminal device does not belong to the first terminal device group, the terminal device may not receive paging.

In embodiments of this application, paging of CNs/PLMNs/NPNs associated with a shared cell is distinguished by using the paging indication information, so that during CN subgroup based paging, the terminal device may determine whether paging from the access network device is for a CN/PLMN/NPN to which the terminal device belongs, to avoid receiving paging in another CN/PLMN/NPN. Therefore, a probability of causing a paging false alarm can be reduced. In addition, paging of different CNs/PLMNs/NPNs may be distinguished by using the paging indication information. In this case, each time of paging corresponds to one CN/PLMN/NPN, and a number of available subgroups in a CN subgrouping mechanism may reach a maximum value supported by the access network device, to support as many UE subgroups as possible and enhance effect of the subgrouping mechanism.

The foregoing describes two methods for distinguishing paging of CNs/PLMNs/NPNs associated with the shared cell. An embodiment of this application further provides another communication method, that is, a third communication method, and the third communication method may also be used to distinguish paging of CNs/PLMNs/NPNs associated with the shared cell. In the third communication method, a plurality of core network devices associated with the first cell may negotiate with each other, a policy used for grouping associated terminal devices, to prevent allocating a same subgroup ID to terminal devices associated with different core network devices in a same cell when the core network devices group the terminal devices.

The following describes the third communication method provided in an embodiment of this application. The third communication method may be executed by a first communication apparatus and a second communication apparatus. The first communication apparatus may be a first core network device or a communication apparatus that can support the first core network device in implementing a function required by the method. Certainly, the first communication apparatus may alternatively be another communication apparatus, for example, a chip system. The second communication apparatus may be a second core network device or a communication apparatus that can support the second core network device in implementing a function required by the method. Certainly, the second communication apparatus may alternatively be another communication apparatus, for example, a chip system. Implementations of the first communication apparatus and the second communication apparatus are not limited. For example, the first communication apparatus may be the first core network device, and the second communication apparatus is the second core network device. Alternatively, the first communication apparatus is a communication apparatus that can support the first core network device in implementing a function required by the method, and the second communication apparatus is the second core network device.

For ease of description, an example in which the third communication method is performed by the first core network device and the second core network device is used below. If this embodiment of this application is applied to the network architecture shown in FIG. 2, the first core network device and the second core network device described below may be core network devices in the network architecture shown in FIG. 2. It should be noted that in this embodiment of this application, an example in which the method is executed by the first core network device and the second core network device is used. If a first cell is associated with more core network devices in addition to the first core network device and the second core network device, any two core network devices may exchange subgrouping policies used by each other to group terminal devices.

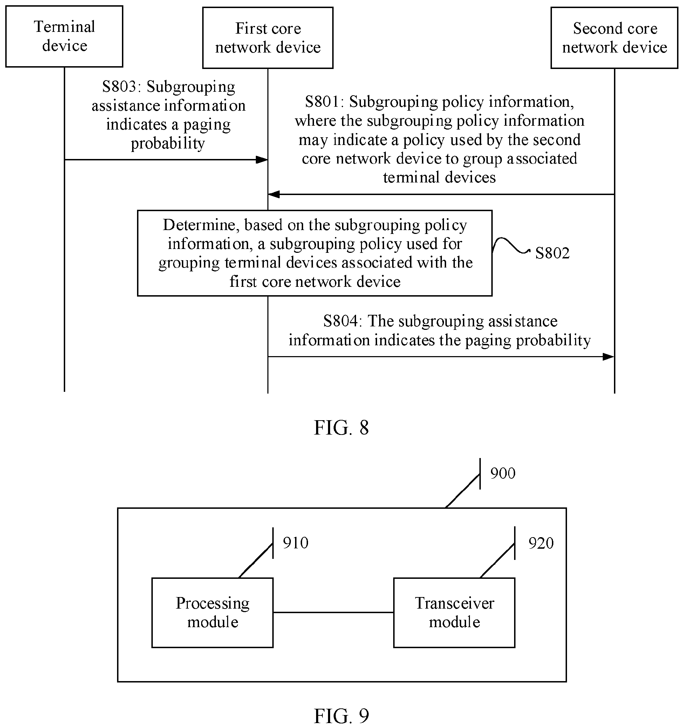

FIG. 8 is a schematic flowchart of the third communication method according to an embodiment of this application.

S801: A second core network device sends subgrouping policy information to a first core network device, and correspondingly, the first core network device receives the subgrouping policy information from the second core network device, where the subgrouping policy information may indicate a policy used by the second core network device to group associated terminal devices.

S802: The first core network device determines, based on the subgrouping policy information, a subgrouping policy used for grouping terminal devices associated with the first core network device.

The second core network device may notify the first core network device of a subgrouping policy used by the second core network device to group the terminal devices, to assist the first core network device in determining to group the terminal devices associated with the first core network device. This prevents allocating a same subgroup ID to different terminal devices associated with the first core network device and different terminal devices associated with the second core network device in a same cell.

For example, the subgrouping policy information may indicate one or more of the following: whether the second core network device groups the terminal devices, a total number of subgroups of terminal devices used by the second core network device, or a value range of subgroup IDs of the terminal devices used by the second core network device.

Correspondingly, if the subgrouping policy information indicates that the second core network device does not group the terminal devices, the first core network device may determine that a total number of available subgroups may be a specified maximum value or a maximum number of subgroups supported by an access network device. If the subgrouping policy information indicates the total number of subgroups of the terminal devices used by the second core network device, the first core network device may determine, based on the total number of subgroups, a total number of available subgroups of terminal devices. For example, a sum of the total number of subgroups of the terminal devices used by the second core network device and the total number of subgroups of the terminal devices used by the first core network device is less than or equal to the specified maximum value or the maximum number of subgroups supported by the access network device. If the subgrouping policy information indicates that the value range of the subgroup IDs of the terminal devices used by the second core network device is [n3, n4], a value range of subgroup IDs of terminal devices used by the first core network device is [n5, n6], where n5 is greater than n4, or n6 is less than n3. In this way, there is no intersection between a value range of subgroup IDs allocated by the first core network device to terminal devices and a value range of subgroup IDs allocated by the second core network device to terminal devices. Therefore, terminal devices controlled by different core network devices in a same cell can be distinguished.

It should be noted that a sequence of performing S801 and S802 is not limited in this embodiment of this application, and a number of times of performing S801 and S802 is not limited. In other words, the first core network device and the second core network device may exchange with each other, subgrouping policies used to group terminal devices for a plurality of times, and the first core network device and the second core network device may also determine a to-be-used subgrouping policy for a plurality of times. For example, the first core network device may determine a subgrouping policy used by the first core network device and notify the second core network device of the subgrouping policy used by the first core network device, and the second core network device may determine, based on the subgrouping policy used by the first core network device, a subgrouping policy used by the second core network device and then notify the first core network device of the subgrouping policy used by the second core network device. The first core network device may re-determine a to-be-used subgrouping policy based on the subgrouping policy used by the second core network device.

S803: The terminal device sends subgrouping assistance information to the first core network device, and correspondingly, the first core network device receives the subgrouping assistance information from the terminal device, where the subgrouping assistance information may indicate a paging probability.

The subgrouping assistance information may be used to determine a subgrouping policy used for grouping terminal devices. For example, the subgrouping assistance information may indicate the paging probability, and a core network device may group associated terminal devices based on paging probabilities of the terminal devices. For example, the core network device may group terminal devices with high paging probabilities into one group, and group terminal devices with low paging probabilities into one group. Optionally, the subgrouping assistance information may further indicate a manner of determining the paging probability by the terminal device.

The terminal device may report the subgrouping assistance information to an associated core network device. For example, the first core network device is a core network device associated with the terminal device, and the terminal device sends the subgrouping assistance information to the first core network device. Similarly, the second core network device is a core network device associated with the terminal device, and the terminal device sends the subgrouping assistance information to the second core network device. In this embodiment of the first application, that a core network device associated with the terminal device is the first core network device is used as an example. As shown in S804, after receiving the subgrouping assistance information, the first core network device may send the subgrouping assistance information to the second core network device, so that the second core network device may determine a to-be-used subgrouping policy based on the subgrouping assistance information. It should be noted that a sequence of performing S803, S801, and S802 is not limited in this embodiment of this application.

Before sending the subgrouping assistance information, the terminal device needs to determine a paging probability. The terminal device determines the paging probability in the following two determining manners.

In a first determining manner, the terminal device determines the paging probability based on duration of paging that is received within specific duration and that is for the terminal device. For example, the paging probability is a ratio of first duration to second duration, the first duration is duration of paging that is for the terminal device and that is received by the terminal device in the second duration, and the second duration is preset duration. For example, the second duration is 12 hours, and duration in which the terminal device receives paging for the terminal device and that is within the 12 hours is 3 hours, that is, the first duration is 3 hours. In this case, the paging probability is 3/12 = 0.25.

It should be noted that different scenarios may correspond to different second duration. For example, the terminal device is usually in a working state between 8:00 a.m. and 12:00 p.m., and the terminal device is usually in a sleeping state between 0:00 a.m. and 6:00 a.m.. In this case, second duration corresponding to 8:00 a.m. and 12:00 p.m. is short, and second duration corresponding to 0:00 a.m. and 6:00 a.m. is long. For example, the second duration corresponding to 8:00 a.m. to 12:00 p.m. may be 2 hours, and the second duration corresponding to 0:00 a.m. to 6:00 a.m. may be 6 hours. In this way, a more accurate paging probability can be obtained.

In a second determining manner, the terminal device determines the paging probability based on a number of monitored POs and a number of received POs for paging the terminal device. For example, the paging probability is a ratio of a first value to a second value, where the first value is a number of POs in which paging that is for the terminal device and that is received by the terminal device is located, and the second value is a number of POs monitored by the terminal device. That is, a quantity N2 of POs in which paging is for the terminal device in a specific quantity N1 of POs may be counted, and the paging probability is N2/N1. For example, if the terminal device monitors 100 POs, and the terminal device receives paging for the terminal device in 10 POs of the 100 POs, the paging probability is 10/100 = 0.1.

It should be noted that a manner in which the terminal device determines the paging probability in this embodiment of this application is also applicable to, for example, a case in which the access network device or the core network device determines a paging probability of the terminal device. In other words, the access network device or the core network device may alternatively determine the paging probability of the terminal device based on duration that is occupied by paging the terminal device and that is within specific duration. Alternatively, the access network device or the core network device may determine the paging probability of the terminal device based on a total number of POs monitored by the terminal device and a number of POs for which paging for the terminal device is sent.

It may be understood that when the subgrouping assistance information indicates the first determining manner, the subgrouping assistance information may include the first duration and the second duration; and when the subgrouping assistance information indicates the second determining manner, the subgrouping assistance information may include the first value and the second value. Optionally, the subgrouping assistance information may be carried in a non-access stratum (non-access stratum, NAS) message, an RRC message, a media access control control element (media access control control element, MAC CE), or the like. This is not limited in this embodiment of this application.

In addition, a frequency at which the terminal device sends the subgrouping assistance information is not limited in this embodiment of this application. For example, the terminal device periodically sends the subgrouping assistance information, and a cycle may be predefined or preconfigured, or the cycle may be configured by the access network device. For another example, the terminal device may alternatively send the subgrouping assistance information based on a request of the access network device. For still another example, the terminal device may send the subgrouping assistance information based on a trigger of an event (condition). For example, when the terminal device determines that the paging probability is less than a threshold or greater than a threshold, the terminal device sends the subgrouping assistance information; or when the terminal device determines that duration of paging for the terminal device is less than a threshold or greater than a threshold, the terminal device sends the subgrouping assistance information.

The foregoing two manners of determining the paging probability may accurately represent a frequency at which the terminal device is paged. In addition, the terminal device may flexibly adjust the second duration or a total number of monitored POs, to obtain a more accurate variation of the paging probability or reduce updating of the paging probability. For example, a paging probability in short total duration may be counted during a period when the terminal device is frequently used, to more accurately reflect the variation of the paging probability; and a paging probability in long total duration may be counted during a period when the terminal device is not frequently used, to reduce updating of the paging probability. The terminal device determines the paging probability and reports the paging probability to an associated core network device, and a plurality of core network devices associated with the first cell exchange paging probabilities of terminal devices with each other. Therefore, each core network device may determine a subgrouping policy for terminal devices based on the paging probabilities of the terminal devices. This is more flexible, and is applicable to a variety of different application scenarios.

An embodiment of this application further provides a fourth communication method. In the communication method, a terminal device may determine, based on identification information of the terminal device, a subgroup to which the terminal device belongs. Essentially, the fourth communication method provides a new subgrouping mechanism, and the subgrouping mechanism may enable the foregoing CN subgrouping mechanism and the UE_ID based subgrouping mechanism to correspond to different value ranges of subgroup IDs on an access network side, thereby avoiding a paging false alarm.

For example, the terminal device may determine, according to the following formula, a subgroup ID of a terminal device group to which the terminal device belongs, for example, a first group number (that is, an ID). The first group number may satisfy: ID = UE_ID mod N + Q, where UE_ID is an identifier of the terminal device. For details, refer to the foregoing related content. Details are not described herein again. It should be noted that the UE_ID only needs to be information related to the identifier of the terminal device. For example, the UE_ID may be UE_ID/(N * Ns), where N is a number of paging frames in a paging cycle of the terminal device, Ns indicates a number of POs in one paging frame, and * indicates a multiplication sign.

N in ID = UE_ID mod N + Q is a total number of subgroups of terminal devices used by the core network device or the access network device. In this specification, the total number of subgroups of terminal devices used by the core network device or the access network device may be a total number of subgroups of terminal devices used for a PO, or may be a total number of subgroups of terminal devices used for a PO corresponding to the terminal device. The PO corresponding to the terminal device is a PO in one paging frame or a PO in POs associated with a PEI. Q may be considered as an offset of a subgroup ID, and is used to distinguish between a value range of subgroup IDs corresponding to the foregoing CN subgrouping mechanism on an access network side and a value range of subgroup IDs corresponding to a UE_ID based subgrouping mechanism in the access network side. Q is related to N.

For example, Q = W - N, where W is a maximum number of subgroups of terminal devices supported by the access network device, or may be a number specified in a protocol. Q may be sent by the access network device, or may be preconfigured or predefined, and W is an integer greater than N. It may be understood that the maximum number of subgroups of terminal devices supported by the access network device may be a maximum number of subgroups of terminal devices supported by the access network device for one PO. Alternatively, the maximum number of subgroups of terminal devices supported by the access network device may be a maximum number of subgroups of terminal devices supported by the access network device for the PO corresponding to the terminal device.

For another example, Q = P * i, where P is a maximum number of subgroups of terminal devices supported by the access network device, or P may be a number specified in a protocol. i is an identifier or an index of a PO corresponding to the terminal device. In other words, the PO corresponding to the terminal device is an $i^{th}$ PO in one paging frame or in POs associated with a PEI. * indicates a multiplication sign.

For another example, $Q = P1 + P2 + ... + P_{j-1}$, where j is an identifier or an index of a PO corresponding to the terminal device, P1 is a total number of subgroups of terminal devices used by the core network device or the access network device for a first PO in one paging frame or in POs associated with one PEI, P2 is a total number of subgroups of terminal devices used by the core network device or the access network device for a second PO in one paging frame or in POs associated with one PEI, and the rest can be deduced by analogy.

In the four communication methods provided in this application, the methods provided in embodiments of this application are separately described from perspectives of interaction between a terminal device, an access network device, and even one or more core network devices. Steps performed by the access network device may be implemented by different functional entities that form the access network device. In other words, functional entities that perform the steps of the access network device may be located in different physical entities. For example, a first functional entity is configured to determine indication information. A second functional entity is configured to send the indication information. In other words, the first functional entity and the second functional entity jointly complete steps performed by a network device in embodiments of this application. A specific division manner of functional entities is not limited in this application. For example, when a network architecture includes one or more DUs, one or more CUs, and one or more radio frequency units (radio unit, RU), the steps performed by the access network device may be implemented by one or more of the DU, the CU, and the RU. To implement functions in the methods provided in embodiments of this application, the terminal device and the access network device may include a hardware structure and/or a software module, and implement the foregoing functions in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

An embodiment of this application further provides a communication apparatus. The following describes, with reference to the accompanying drawings, a communication apparatus for implementing the methods in embodiments of this application.

FIG. 9 is a schematic block diagram of a communication apparatus 900 according to an embodiment of this application. The communication apparatus 900 may include a processing module 910 and a transceiver module 920. Optionally, the communication apparatus 900 may further include a storage unit, and the storage unit may be configured to store instructions (code or a program) and/or data. The processing module 910 and the transceiver module 920 may be coupled to the storage unit. For example, the processing module 910 may read instructions (the code or the program) and/or the data in the storage unit, to implement a corresponding method. The foregoing units may be independently disposed, or may be partially or completely integrated.

It should be understood that the processing module 910 may be a processor or a controller. For example, the processing module 910 may be a general-purpose central processing unit (central processing unit, CPU), a general-purpose processor, a digital signal processing (digital signal processing, DSP), an application-specific integrated circuit (application specific integrated circuit, ASIC), a field programmable gate array (field programmable gate array, FPGA) or another programmable logic device, a transistor logic device, a hardware component, or any combination thereof. The processing module 910 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 920 is an interface circuit of the apparatus, and is configured to receive a signal from another apparatus. For example, when the apparatus is implemented in a form of a chip, the transceiver module 920 is an interface circuit used by the chip to receive a signal from another chip or apparatus, or is an interface circuit used by the chip to send a signal to another chip or apparatus.

The communication apparatus 900 may be a terminal device, an access network device, a first core network device, or a second core network device in the foregoing embodiments. Alternatively, the communication apparatus 900 may be a chip used for a terminal device, an access network device, a first core network device, or a second core network device. For example, when the communication apparatus 900 is a terminal device, an access network device, a first core network device, or a second core network device, the processing module 910 may be, for example, a processor, and the transceiver module 920 may be, for example, a transceiver. Optionally, the transceiver may include a radio frequency circuit, and the storage unit may be, for example, a memory. For example, when the communication apparatus 900 is a chip used for a terminal device, an access network device, a first core network device, or a second core network device, the processing module 910 may be, for example, a processor, and the transceiver module 920 may be, for example, an input/output interface, a pin, a circuit, or the like. The processing module 910 may execute computer-executable instructions stored in the storage unit. Optionally, the storage unit is a storage unit in the chip, for example, a register or a cache. Alternatively, the storage unit may be a storage unit that is in a network device, a terminal device, or a location management device and that is located outside the chip, such as a read-only memory (read-only memory, ROM), another type of static storage device that can store static information and instructions, a random access memory (random access memory, RAM), or the like.

In a possible implementation, the communication apparatus 900 can correspondingly implement behavior and functions of a terminal device in the foregoing method embodiments, for example, implement the method performed by the terminal device in the embodiment in FIG. 3, FIG. 7, or FIG. 8. The communication apparatus 900 may be a terminal device, may be a component (for example, a chip or a circuit) used in the terminal device, may be a chip or a chipset in the terminal device, or may be a part of a chip used to perform a related method function.

In Example 1, the processing module 910 may be configured to obtain first subgroup configuration information corresponding to a first PLMN, where the first PLMN is a PLMN associated with the communication apparatus 900, the first PLMN belongs to a PLMN set, and the PLMN set is associated with a first cell. The transceiver module 920 is configured to receive paging from the first cell based on the first subgroup configuration information.

In an optional implementation, the transceiver module 920 is further configured to receive indication information, where the indication information indicates the first PLMN, or the indication information indicates the first PLMN and the first subgroup configuration information.

In an optional implementation, the first subgroup configuration information indicates one or more of the following: whether the first cell supports a core network CN subgrouping mechanism used for the first PLMN; a correspondence between a first group number and a second group number, where the first group number is a subgroup ID used by a terminal device to receive paging from the first cell, and the second group number is a subgroup ID from a core network device; information about a first PEI, where the first PEI indicates whether to receive paging; or subgroup indication information that is used to determine a location of a first indication in a first message, where the first indication corresponds to a terminal device group, the terminal device group includes the communication apparatus 900, and the first indication indicates whether to monitor a PDCCH corresponding to the terminal device group.

In an optional implementation, the first subgroup configuration information indicates the correspondence between the first group number and the second group number, and the first subgroup configuration information may include one or more of the following: a value range of the first group number; or an offset value between the first group number and the second group number.

In an optional implementation, the first group number and the second group number satisfy one or more of the following relationships:

ID = k mod (n2 - n1 + 1) + n1, or ID = k + M, where ID is the first group number, k is the second group number, mod is a modulo operation, the value range of the first group number is greater than or equal to n1 and less than or equal to n2, n1 and n2 are integers, M is the offset value, and M is an integer.

In an optional implementation, the first subgroup configuration information indicates the information about the first PEI, and the first subgroup configuration information includes one or more of the following: a search space configuration of the first PEI, a control resource set configuration of the first PEI, a time domain resource location for monitoring the first PEI, or a frequency domain resource location for monitoring the first PEI.

In an optional implementation, the first subgroup configuration information indicates the correspondence between the first group number and the second group number, and the transceiver module 920 is specifically configured to: receive paging indication information, where the paging indication information indicates a subgroup ID of the terminal device; and if the subgroup ID matches the first group number determined by the processing module 910 based on the correspondence, receive paging.

In an optional implementation, the first subgroup configuration information indicates the information about the first PEI, and the transceiver module 920 is specifically configured to: monitor the first PEI based on the information about the first PEI, and receive paging based on the first PEI, where the first PEI indicates to receive paging.

In Example 2, the transceiver module 920 is configured to receive first indication information, where the first indication information is used to page a terminal device associated with a first PLMN, the first PLMN belongs to a PLMN set, and the PLMN set is associated with a first cell. The processing module 910 determines that an associated PLMN is the first PLMN, and the transceiver module 920 is configured to receive paging from the first cell.

In an optional implementation, the first indication information may include an identity or an index of the first PLMN, to indicate the first PLMN.

In an optional implementation, the first indication information is carried in DCI or a PEI. Alternatively, the first indication information is the first PEI, and different PEIs may correspond to different PLMNs.

In an optional implementation, the transceiver module 920 is further configured to receive second indication information, where the second indication information indicates a terminal device group.

In Example 3, the processing module 910 is configured to determine a first group number. The transceiver module 920 is configured to receive paging from a first cell based on the first group number. The first group number is a subgroup ID of a terminal device group to which the communication apparatus 900 belongs, and the first group number ID satisfies: ID = UE_ID mod N + Q. UE_ID is used to identify the terminal device, N is a total number of subgroups of terminal devices used by a core network device or an access network device, and Q is configured or predefined, or Q is related to N.

In a possible implementation, the communication apparatus 900 can correspondingly implement behavior and functions of an access network device in the foregoing method embodiments, for example, implement the method performed by the access network device in the embodiment in FIG. 3 or FIG. 7. For example, the communication apparatus 900 may be an access network device, may be a component (for example, a chip or a circuit) used in the access network device, may be a chip or a chipset in the access network device, or may be a part of a chip used to perform a related method function.

In Example 1, the transceiver module 920 may be configured to: send first subgroup configuration information corresponding to a first PLMN, and send paging indication information. The first PLMN is a PLMN associated with a terminal device, the first PLMN belongs to a PLMN set, and the PLMN set is associated with a first cell. The paging indication information is used to page the terminal device in the first cell.

In an optional implementation, the transceiver module 920 is further configured to send indication information, where the indication information indicates the first PLMN, or the indication information indicates the first PLMN and the first subgroup configuration information.

In an optional implementation, the first subgroup configuration information indicates one or more of the following: whether the first cell supports a core network CN subgrouping mechanism used for the first PLMN; a correspondence between a first group number and a second group number, where the first group number is a subgroup ID used by the terminal device to receive paging from the first cell, and the second group number is a subgroup ID from a core network device; information about a first PEI, where the first PEI indicates whether to receive paging; or subgroup indication information that is used to determine a location of a first indication in a first message, where the first indication corresponds to a terminal device group, the terminal device group includes the terminal device, and the first indication indicates whether to monitor a PDCCH corresponding to the terminal device group.

In an optional implementation, the first subgroup configuration information indicates the correspondence between the first group number and the second group number, and the first subgroup configuration information includes one or more of the following: a value range of the first group number; or an offset value between the first group number and the second group number.

In an optional implementation, the first group number and the second group number satisfy one or more of the following relationships: ID = k mod (n2 - n1 + 1) + n1, or ID = k + M, where ID is the first group number, k is the second group number, mod is a modulo operation, the value range of the first group number is greater than or equal to n1 and less than or equal to n2, n1 and n2 are integers, M is the offset value, and M is an integer.

In an optional implementation, the first subgroup configuration information indicates the information about the first PEI, and the first subgroup configuration information includes one or more of the following: a search space configuration of the first PEI, a control resource set configuration of the first PEI, a time domain resource location for monitoring the first PEI, or a frequency domain resource location for monitoring the first PEI.

In Example 2, the processing module 910 is configured to generate first indication information, where the first indication information is used to page a terminal device associated with the first PLMN, the first PLMN belongs to the PLMN set, and the PLMN set is associated with the first cell. The transceiver module 920 is configured to send the first indication information.

In an optional implementation, the first indication information may include an identity or an index of the first PLMN, to indicate the first PLMN.

In an optional implementation, the first indication information is carried in DCI or a PEI. Alternatively, the first indication information is the first PEI, and different PEIs may correspond to different PLMNs.

In an optional implementation, the transceiver module 920 is further configured to send second indication information, where the second indication information indicates a terminal device group.

In a possible implementation, the communication apparatus 900 can correspondingly implement behavior and functions of a first core network device or a second core network device in the foregoing method embodiments, for example, implement the method performed by the first core network device or the second core network device in the embodiment in FIG. 8. For example, the communication apparatus 900 may be the first core network device or the second core network device, may be a component (for example, a chip or a circuit) used in the first core network device or the second core network device, may be a chip or a chipset in the first core network device or the second core network device, or may be a part of a chip configured to perform a related method function.

For example, the communication apparatus 900 can correspondingly implement behavior and functions of the first core network device in the foregoing method embodiments, and the transceiver module 920 is configured to receive subgrouping policy information from the second core network device. The processing module 910 is configured to determine a subgrouping policy for associated terminal devices based on subgrouping information. The communication apparatus 900 and the second core network device are associated with a first cell. The subgrouping policy information indicates a policy used by the second core network device to group associated terminal devices.

In an optional implementation, the subgrouping policy information indicates one or more of the following: whether the second core network device groups terminal devices, a total number of subgroups of terminal devices used by the second core network device, or a value range of subgroup IDs of terminal devices used by the second core network device.

In an optional implementation, the transceiver module 920 is further configured to receive subgrouping assistance information from a terminal device, where the subgrouping assistance information indicates a paging probability. The paging probability is a ratio of first duration to second duration, the first duration is duration of paging that is for the terminal device and that is received by the terminal device in the second duration, and the second duration is preset duration. Alternatively, the paging probability is a ratio of a first value to a second value, the first value is a number of paging occasions in which paging that is for the terminal device and that is received by the terminal device is located, and the second value is a number of paging occasions monitored by the terminal device.

In an optional implementation, the transceiver module 920 is further configured to send the subgrouping assistance information to the second core network device.

For another example, the communication apparatus 900 can correspondingly implement behavior and functions of the second core network device in the foregoing method embodiments, and the processing module 910 may be configured to determine subgrouping policy information. The transceiver module 920 is configured to send the subgrouping policy information to the first core network device. The first core network device and the communication apparatus 900 are associated with a first cell. The subgrouping policy information indicates a policy used by the communication apparatus 900 to group associated terminal devices.

In an optional implementation, the transceiver module 920 is further configured to receive the subgrouping assistance information sent by the first core network device.

It should be understood that, in this embodiment of this application, the processing module 910 may be implemented by a processor or a processor-related circuit component, and the transceiver module 920 may be implemented by a transceiver or a transceiver-related circuit component.

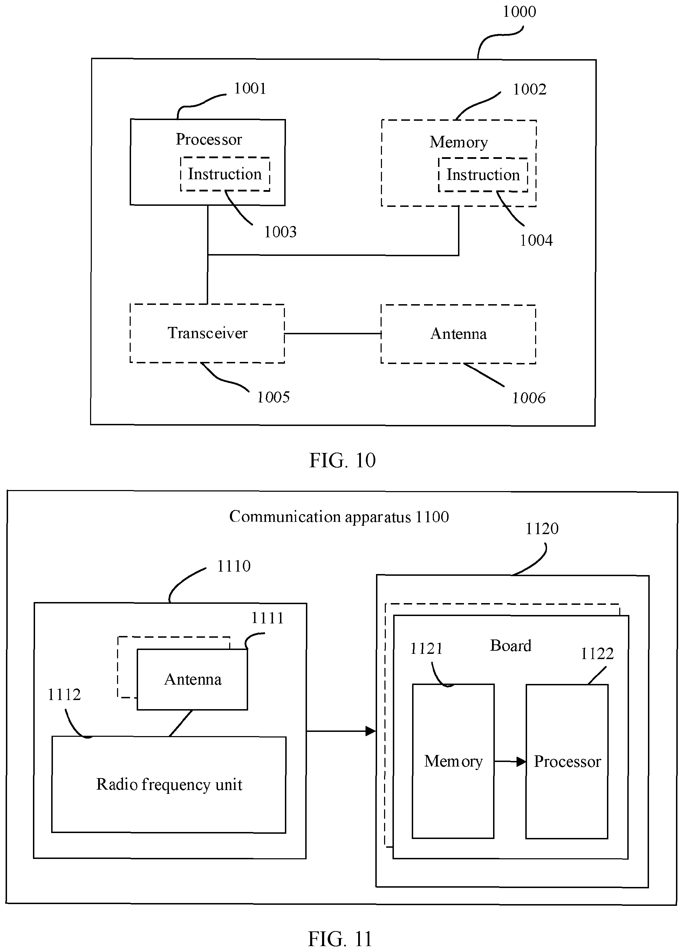

FIG. 10 is a schematic block diagram of a communication apparatus 1000 according to an embodiment of this application. The communication apparatus 1000 may be a terminal device (an access network device, a first core network device, or a second core network device) that can implement functions of the terminal device (the access network device, the first core network device, or the second core network device) in the methods provided in embodiments of this application. Alternatively, the communication apparatus 1000 may be an apparatus that can support a terminal device (an access network device, a first core network device, or a second core network device) in implementing a corresponding function in the methods provided in embodiments of this application. The communication apparatus 1000 may be a chip system. In this embodiment of this application, the chip system may include a chip, or may include a chip and another discrete component. For specific functions, refer to the descriptions in the foregoing method embodiments.

The communication apparatus 1000 includes one or more processors 1001 that are configured to implement or support the communication apparatus 1000 in implementing functions of a terminal device (an access network device, a first core network device, or a second core network device) in the methods provided in embodiments of this application. For details, refer to detailed descriptions in the method examples. Details are not described herein again. The processor 1001 may also be referred to as a processing unit or a processing module, and may implement a specific control function. The processor 1001 may be a general-purpose processor, a dedicated processor, or the like. For example, the processor 1501 includes a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 1000, execute a software program, and/or process data. Different processors may be independent components, or may be integrated into one or more processors, for example, integrated into one or more application-specific integrated circuits.

Optionally, the communication apparatus 1000 includes one or more memories 1002 that are configured to store instructions 1004, and the instructions may be run on the processor 1001, to enable the communication apparatus 1000 to perform the methods described in the foregoing method embodiments. The memory 1002 is coupled to the processor 1001. Coupling in this embodiment of this application may be indirect coupling or a communication connection between apparatuses, units, or modules, may be in an electrical form, a mechanical form, or another form, and is used for information exchange between the apparatuses, the units, or the modules. The processor 1001 may cooperate with the memory 1002. At least one of the at least one memory may be included in the processor. It should be noted that the memory 1002 is not mandatory. Therefore, the memory 1002 is shown by using a dashed line in FIG. 10.

Optionally, the memory 1002 may further store data. The processor and the memory may be separately disposed, or may be integrated together. In this embodiment of this application, the memory 1002 may be a nonvolatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

Optionally, the communication apparatus 1000 may include instructions 1003 (which may also be referred to as code or a program sometimes), and the instructions 1003 may be run on the processor, to enable the communication apparatus 1000 to perform the methods described in the foregoing embodiments. The processor 1001 may store data.

Optionally, the communication apparatus 1000 may further include a transceiver 1005 and an antenna 1006. The transceiver 1005 may be referred to as a transceiver unit, a transceiver module, a transceiver device, a transceiver circuit, a transceiver, an input/output interface, and the like, and is configured to implement a transceiver function of the communication apparatus 1000 through the antenna 1006.

The processor 1001 and the transceiver 1005 described in this application may be implemented in an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a larger device (for example, a module that can be embedded into another device). For details, refer to the foregoing descriptions of the terminal device and the network device. Details are not described herein again.

Optionally, the communication apparatus 1000 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1000 may include more or fewer components, some components may be integrated, or some components may be split. These components may be implemented by hardware, software, or a combination of software and hardware.

It should be noted that the communication apparatus in the foregoing embodiments may be a terminal device (an access network device, a first core network device, or a second core network device), may be a circuit, may be a chip used in a terminal device (or a network device), or may be another combined component or component that has the foregoing terminal device (the access network device, the first core network device, or the second core network device). When the communication apparatus is a terminal device (an access network device, a first core network device, or a second core network device), the transceiver module may be a transceiver and may include an antenna, a radio frequency circuit, and the like, and the processing module may be a processor, for example, a central processing unit (central processing unit, CPU). When the communication apparatus is a component that has functions of the foregoing terminal device (an access network device, a first core network device, or a second core network device), the transceiver module may be a radio frequency unit, and the processing module may be a processor. When the communication apparatus is a chip system, the communication apparatus may be a field programmable gate array (field programmable gate array, FPGA), an application-specific integrated circuit (application-specific integrated circuit, ASIC), a system on chip (system on chip, SoC), a CPU, a network processor (network processor, NP), a digital signal processor (digital signal processor, DSP), a micro controller unit (micro controller unit, MCU), a programmable logic device (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to: receive code instructions (where the code instructions are stored in the memory, and may be directly read from the memory, or may be read from the memory through another component), and transmit the code instructions to the processor. The processor may be configured to run the code instructions to perform the methods in the foregoing method embodiments. For another example, the interface circuit may alternatively be a signal transmission interface circuit between a communication processor and a transceiver.

FIG. 11 is a simplified schematic diagram of a structure of a communication apparatus. For ease of understanding and illustration, in FIG. 11, an example in which the communication apparatus is an access network device such as a base station is used. The base station may be used in the system shown in FIG. 2, may be the access network device in FIG. 2, and performs functions of the access network device in the foregoing method embodiments.

The communication apparatus 1100 may include a processor 1122, and may further include a transceiver 1110 and a memory 1121. The processor 1122 is configured to support the communication apparatus 1100 in performing a corresponding function in the foregoing methods. The transceiver 1110 may be used by the communication apparatus to perform communication, for example, may be configured to send the foregoing indication information. The memory 1121 is coupled to the processor 1122, and may be configured to store a program and data that are necessary for the communication apparatus 1100 to implement functions.

Specifically, the transceiver 1110 may be a wireless transceiver, and may be configured to support the communication apparatus 1100 in receiving and sending signaling and/or data through a wireless air interface. The transceiver 1110 may also be referred to as a transceiver unit or a communication unit. The transceiver 1110 may include one or more radio frequency units 1112 and one or more antennas 1111. The radio frequency unit is, for example, a remote radio unit (remote radio unit, RRU) or an active antenna unit (active antenna unit, AAU), and may be specifically configured to: transmit a radio frequency signal, and perform conversion between the radio frequency signal and a baseband signal. The one or more antennas may be specifically configured to radiate and receive the radio frequency signal. Optionally, the transceiver 1110 may include only the foregoing radio frequency units. In this case, the communication apparatus 1100 may include the transceiver 1110, the memory 1121, the processor 1122, and an antenna 1111.

The memory 1121 and the processor 1122 may be integrated or may be independent of each other. As shown in FIG. 11, the memory 1121 and the processor 1122 may be integrated into a control unit 1120 of the communication apparatus 1100. For example, the control unit 1120 may include a baseband unit (baseband unit, BBU) of an LTE base station, and the baseband unit may also be referred to as a digital unit (digital unit, DU). Alternatively, the control unit 1120 may include a DU and/or a CU in a base station in 5G and future radio access technologies. The control unit 1120 may include one or more antenna panels. A plurality of antenna panels may jointly support a radio access network (such as an LTE network) of a single access standard, or the plurality of antenna panels may separately support radio access networks (for example, an LTE network, a 5G network, or another network) of different access standards. The memory 1121 and the processor 1122 may serve one or more antenna panels. In other words, the memory 1121 and the processor 1122 may be separately disposed on each antenna panel. Alternatively, the plurality of antenna panels may share a same memory 1121 and a same processor 1122. In addition, a necessary circuit may be disposed on each antenna panel. For example, the circuit may be configured to implement coupling between the memory 1121 and the processor 1122. The transceiver 1110, the processor 1122, and the memory 1121 may be connected by using a bus (bus) structure and/or another connection medium.

On a basis of the structure shown in FIG. 11, when the communication apparatus 1100 needs to send data, the processor 1122 may perform baseband processing on to-be-sent data, and outputs a baseband signal to the radio frequency unit. The radio frequency unit performs radio frequency processing on the baseband signal and then sends a radio frequency signal in a form of an electromagnetic wave through the antenna. When data is sent to the communication apparatus 1100, the radio frequency unit receives the radio frequency signal through the antenna, converts the radio frequency signal into a baseband signal, and outputs the baseband signal to the processor 1122. The processor 1122 converts the baseband signal into data and processes the data.

Based on a structure shown in FIG. 11, the transceiver 1110 may be configured to perform the foregoing steps performed by the transceiver 1005, and/or the processor 1122 may be configured to invoke instructions in the memory 1121, to perform the foregoing steps performed by the processor 1001.

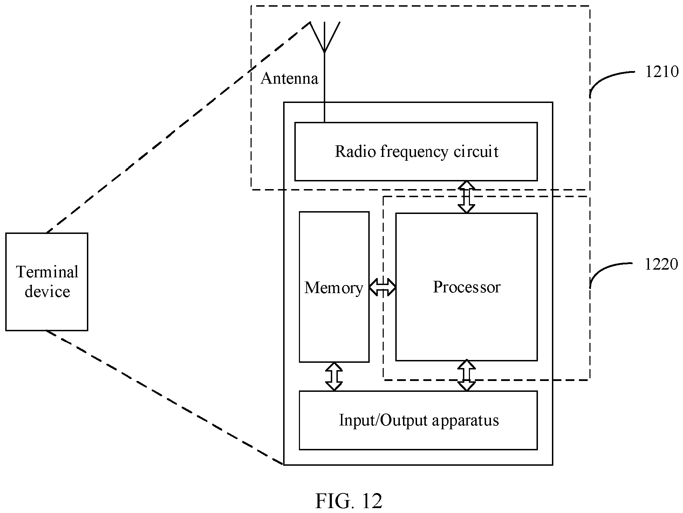

FIG. 12 is a simplified schematic diagram of a structure of a terminal device. For ease of understanding and illustration, in FIG. 12, an example in which the terminal device is a mobile phone is used. As shown in FIG. 12, the terminal device includes a processor, a memory, a radio frequency circuit, an antenna, and an input/output apparatus. The processor is mainly configured to: process a communication protocol and communication data, control an on-board unit, execute a software program, process data of the software program, and so on. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. It should be noted that some types of devices may have no input/output apparatus.

When the processor needs to send data, after performing baseband processing on to-be-sent data, the processor outputs a baseband signal to the radio frequency circuit, and the radio frequency circuit performs radio frequency processing on the baseband signal and then sends the radio frequency signal to the outside in a form of an electromagnetic wave through the antenna. When data is sent to the device, the radio frequency circuit receives a radio frequency signal through the antenna, converts the radio frequency signal into a baseband signal, and outputs the baseband signal to the processor. The processor converts the baseband signal into data and processes the data. For ease of description, FIG. 12 shows only one memory and one processor. In an actual device product, there may be one or more processors and one or more memories. The memory may also be referred to as a storage medium, a storage device, or the like.

The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the apparatus, and the processor having a processing function may be considered as a processing unit of the apparatus. As shown in FIG. 12, the apparatus includes a transceiver unit 1210 and a processing unit 1220. The transceiver unit 1210 may also be referred to as a transceiver, a transceiver device, a transceiver apparatus, or the like. The processing unit 1220 may also be referred to as a processor, a processing board, a processing module, a processing apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. That is, the transceiver unit 1210 includes the receiving unit and the sending unit. The transceiver unit 1210 sometimes may also be referred to as a transceiver device, a transceiver, a transceiver circuit, or the like. The receiving unit sometimes may also be referred to as a receiver device, a receiver, a receive circuit, or the like. The sending unit sometimes may also be referred to as a transmitter device, a transmitter, a transmit circuit, or the like.

It should be understood that the transceiver unit 1210 is configured to perform a sending operation and a receiving operation of the terminal device in the foregoing method embodiments, and the processing unit 1220 is configured to perform an operation other than the receiving operation and the sending operation of the terminal device in the foregoing method embodiments. For example, in an implementation, the transceiver unit 1210 may be configured to perform a sending step, a receiving step, and/or another process configured to support the technology described in this specification in the embodiment shown in FIG. 3, FIG. 7, or FIG. 8. The processing unit 1220 may be configured to perform steps other than the receiving step or the sending step in the embodiment shown in FIG. 3, FIG. 7, or FIG. 8, and/or another process configured to support the technology described in this specification.

When the communication apparatus is a chip apparatus or a circuit, the apparatus may include a transceiver unit and a processing unit. The transceiver unit may be an input/output circuit and/or a communication interface; and the processing unit is an integrated processor, a microprocessor, or an integrated circuit.

An embodiment of this application further provides a communication system. Specifically, the communication system includes an access network device, a terminal device, and a plurality of core network devices, or may further include more access network devices, more core network devices, and more terminal devices. For example, the communication system includes an access network device, a terminal device, a first core network device, and a second core network device that are configured to implement related functions in FIG. 3, FIG. 7, or FIG. 8. The network devices are separately configured to implement functions of a network part related to FIG. 3, FIG. 7, or FIG. 8. The terminal devices are configured to implement functions of the terminal device related to FIG. 3, FIG. 7, or FIG. 8. For details, refer to the related descriptions in the method embodiments. Details are not described herein again. The first core network device is separately configured to implement functions of the first core network device related to FIG. 3, FIG. 7, or FIG. 8. The second core network device is separately configured to implement functions of the second core network device related to FIG. 3, FIG. 7, or FIG. 8.

An embodiment of this application further provides a computer-readable storage medium that includes instructions. When the instructions are run on a computer, the computer is enabled to perform the method performed by the access network device in FIG. 3, FIG. 7, or FIG. 8; when the instructions are run on a computer, the computer is enabled to perform the method performed by the terminal device in FIG. 3, FIG. 7, or FIG. 8; when the instructions are run on a computer, the computer is enabled to perform the method performed by the first core network device in FIG. 3, FIG. 7, or FIG. 8; or when the instructions are run on a computer, the computer is enabled to perform the method performed by the second core network device in FIG. 3, FIG. 7, or FIG. 8.

An embodiment of this application further provides a computer program product that includes instructions. When the instructions are run on a computer, the computer is enabled to perform the method performed by the access network device in FIG. 3, FIG. 7, or FIG. 8; when the instructions are run on a computer, the computer is enabled to perform the method performed by the terminal device in FIG. 3, FIG. 7, or FIG. 8; when the instructions are run on a computer, the computer is enabled to perform the method performed by the first core network device in FIG. 3, FIG. 7, or FIG. 8; or when the instructions are run on a computer, the computer is enabled to perform the method performed by the second core network device in FIG. 3, FIG. 7, or FIG. 8.

An embodiment of this application provides a chip system. The chip system includes a processor, and may further include a memory. The chip system is configured to implement a function of an access network device, a terminal device, a first core network device, or a second core network device in the foregoing methods. Alternatively, the chip system is configured to implement a function of an access network device, a terminal device, a first core network device, or a second core network device in the foregoing methods. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part making contributions, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a RAM, a magnetic disk, or an optical disc.

A person skilled in the art can make various modifications and variations to this application without departing from the scope of this application. This application is intended to cover these modifications and variations of this application provided that they fall within the scope of the following claims and their equivalent technologies.

**Claims**

1. A communication method, comprising:

   determining a first group number ID, wherein the first group number is a subgroup ID of a UE_ID based subgroup to which a terminal device belongs, and the first group number satisfies:

   $$ID = UE\_ID \bmod N + (W - N),$$

   wherein
   UE_ID is information identifying the terminal device, N is a total number of subgroups for UE_ID based subgrouping in one paging occasion PO, W is a sum of the total number of subgroups for UE_ID based subgrouping in the PO and a total number of subgroups for core network CN based subgrouping in the PO, and mod is a modulo operation; and
   receiving paging based on the first group number.

2. The method according to claim 1, wherein the UE_ID is UE_ID'/(X * Ns), wherein
   UE_ID' is an identifier of the terminal device, X is a number of paging frames in a paging cycle of the terminal device, Ns is a number of paging occasions Pos for one paging frame, and * is a multiplication sign.

3. A communication method, wherein the method is applicable to a terminal device, and the method comprises:

obtaining first subgroup configuration information corresponding to a first public land mobile network PLMN, wherein the first PLMN is a PLMN associated with the terminal device, the first PLMN belongs to a PLMN set, and the PLMN set is associated with a first cell; and

receiving paging from the first cell based on the first subgroup configuration information.

4. The method according to claim 3, wherein the method further comprises:
receiving indication information, wherein the indication information indicates the first PLMN, or the indication information indicates the first PLMN and the first subgroup configuration information.

5. The method according to claim 3 or 4, wherein the first subgroup configuration information indicates one or more of the following:

whether the first cell supports a core network CN subgrouping mechanism used for the first PLMN;
a correspondence between a first group number and a second group number, wherein the first group number is a subgroup ID used by the terminal device to receive paging from the first cell, and the second group number is a subgroup ID from a core network device;
information about a first paging early indication PEI, wherein the first PEI indicates whether to receive paging; or subgroup indication configuration information that is used to determine a location of a first indication in paging indication information, wherein the first indication corresponds to a terminal device group, the terminal device group comprises the terminal device, and the first indication indicates whether to monitor a physical downlink control channel PDCCH corresponding to the terminal device group.

6. The method according to claim 5, wherein the first subgroup configuration information indicates the correspondence between the first group number and the second group number, and the first subgroup configuration information comprises one or more of the following:

a value range of the first group number; or
an offset value between the first group number and the second group number.

7. The method according to claim 5 or 6, wherein the first group number and the second group number satisfy one or more of the following relationships:

$$ID = k \bmod (n2 - n1 + 1) + n1, \text{ or } ID = k + M,$$

wherein
ID is the first group number, k is the second group number, mod is a modulo operation, the value range of the first group number is greater than or equal to n1 and less than or equal to n2, n1 and n2 are integers, M is the offset value between the first group number and the second group number, and M is an integer.

8. The method according to claim 5, wherein the first subgroup configuration information indicates the information about the first PEI, and the first subgroup configuration information comprises one or more of the following:

a search space configuration of the first PEI;
a control resource set configuration of the first PEI;
a time domain resource location for monitoring the first PEI; or
a frequency domain resource location for monitoring the first PEI.

9. The method according to claim 5 or 6, wherein the first subgroup configuration information indicates the correspondence between the first group number and the second group number, and the receiving paging from the first cell based on the first subgroup configuration information comprises:

receiving the paging indication information, wherein the paging indication information indicates a subgroup ID of the terminal device; and
receiving paging if the subgroup ID matches the first group number determined based on the correspondence.

10. The method according to claim 8, wherein the first subgroup configuration information indicates the information about the first PEI, and the receiving paging from the first cell based on the first subgroup configuration information comprises:

monitoring the first PEI based on the information about the first PEI; and
receiving paging based on the first PEI, wherein the first PEI indicates to receive paging.

11. A communication method, comprising:

sending first subgroup configuration information corresponding to a first public land mobile network PLMN, wherein the first PLMN is a PLMN associated with a terminal device, the first PLMN belongs to a PLMN set, and the PLMN set is associated with a first cell; and
sending paging indication information, wherein the paging indication information is used to page the terminal device in the first cell.

12. The method according to claim 11, wherein the method further comprises:
sending indication information, wherein the indication information indicates the first PLMN, or the indication information indicates the first PLMN and the first subgroup configuration information.

13. The method according to claim 11 or 12, wherein the first subgroup configuration information indicates one or more of the following:

whether the first cell supports a core network CN subgrouping mechanism used for the first PLMN;
a correspondence between a first group number and a second group number, wherein the first group number is a subgroup ID used by the terminal device to receive paging from the first cell, and the second group number is a subgroup ID from a core network device;
information about a first paging early indication PEI, wherein the first PEI indicates whether to receive paging; or
subgroup indication configuration information that is used to determine a location of a first indication in the paging indication information, wherein the first indication corresponds to a terminal device group, the terminal device group comprises the terminal device, and the first indication indicates whether to monitor a physical downlink control channel PDCCH corresponding to the terminal device group.

14. The method according to claim 13, wherein the first subgroup configuration information indicates the correspondence between the first group number and the second group number, and the first subgroup configuration information comprises one or more of the following:

a value range of the first group number; or
an offset value between the first group number and the second group number.

15. The method according to claim 13 or 14, wherein the first group number and the second group number satisfy one or more of the following relationships:

$$ID = k \bmod (n2 - n1 + 1) + n1, \text{ or } ID = k + M,$$

wherein
ID is the first group number, k is the second group number, mod is a modulo operation, the value range of the first group number is greater than or equal to n1 and less than or equal to n2, n1 and n2 are integers, M is the offset value between the first group number and the second group number, and M is an integer.

16. The method according to claim 13, wherein the first subgroup configuration information indicates the information about the first PEI, and the first subgroup configuration information comprises one or more of the following:

a search space configuration of the first PEI;
a control resource set configuration of the first PEI;
a time domain resource location for monitoring the first PEI; or
a frequency domain resource location for monitoring the first PEI.

17. A communication apparatus, comprising a processing module and a transceiver module, wherein

the processing module is configured to determine a first group number ID, wherein the first group number is a subgroup ID of a UE_ID based subgroup to which the communication apparatus belongs, and the first group number satisfies:

$$ID = UE\_ID \bmod N + (W - N),$$

wherein
UE_ID is information identifying the communication apparatus, N is a total number of subgroups for UE ID based subgrouping in one paging occasion PO, W is a sum of the total number of subgroups for UE_ID based subgrouping in the PO and a total number of subgroups for core network CN based subgrouping in the PO, and mod is a modulo operation; and
the processing module is configured to receive paging based on the first group number.

18. The communication apparatus according to claim 17, wherein the UE_ID is UE_ID'/(X * Ns), wherein UE_ID' is an identifier of the communication apparatus, X is a number of paging frames in a paging cycle of the communication apparatus, Ns is a number of paging occasions POs for one paging frame, and * is a multiplication sign.

19. A communication apparatus, comprising a processing module and a transceiver module, wherein

the processing module is configured to obtain first subgroup configuration information corresponding to a first public land mobile network PLMN, wherein the first PLMN is a PLMN associated with the communication apparatus, the first PLMN belongs to a PLMN set, and the PLMN set is associated with a first cell; and
the transceiver module is configured to receive paging from the first cell based on the first subgroup configuration information.

20. The communication apparatus according to claim 19, wherein the transceiver module is further configured to: receive indication information, wherein the indication information indicates the first PLMN, or the indication information indicates the first PLMN and the first subgroup configuration information.

21. The communication apparatus according to claim 19 or 20, wherein the first subgroup configuration information indicates one or more of the following:

whether the first cell supports a core network CN subgrouping mechanism used for the first PLMN;
a correspondence between a first group number and a second group number, wherein the first group number is a subgroup ID used by the terminal device to receive paging from the first cell, and the second group number is a subgroup ID from a core network device;
information about a first paging early indication PEI, wherein the first PEI indicates whether to receive paging; or
subgroup indication configuration information that is used to determine a location of a first indication in paging indication information, wherein the first indication corresponds to a terminal device group, the terminal device group comprises the terminal device, and the first indication indicates whether to monitor a physical downlink control channel PDCCH corresponding to the terminal device group.

22. The communication apparatus according to claim 21, wherein the first subgroup configuration information indicates the correspondence between the first group number and the second group number, and the first subgroup configuration information comprises one or more of the following:

a value range of the first group number; or
an offset value between the first group number and the second group number.

23. The communication apparatus according to claim 21 or 22, wherein the first group number and the second group number satisfy one or more of the following relationships:

$$ID = k \bmod (n2 - n1 + 1) + n1, \text{ or } ID = k + M,$$

wherein
ID is the first group number, k is the second group number, mod is a modulo operation, the value range of the first group number is greater than or equal to n1 and less than or equal to n2, n1 and n2 are integers, M is the offset value between the first group number and the second group number, and M is an integer.

24. The communication apparatus according to claim 21, wherein the first subgroup configuration information indicates the information about the first PEI, and the first subgroup configuration information comprises one or more of the following:

a search space configuration of the first PEI;
a control resource set configuration of the first PEI;
a time domain resource location for monitoring the first PEI; or
a frequency domain resource location for monitoring the first PEI.

25. The communication apparatus according to claim 21 or 22, wherein the first subgroup configuration information indicates the correspondence between the first group number and the second group number, and the transceiver module is specifically configured to:

receive the paging indication information, wherein the paging indication information indicates a subgroup ID of the terminal device; and
receive paging if the subgroup ID matches the first group number determined based on the correspondence.

26. The communication apparatus according to claim 24, wherein the first subgroup configuration information indicates the information about the first PEI, and the transceiver module is specifically configured to:

monitor the first PEI based on the information about the first PEI; and
receive paging based on the first PEI, wherein the first PEI indicates to receive paging.

27. A communication apparatus, comprising a processing module and a transceiver module, wherein

the processing module is configured to determine first subgroup configuration information corresponding to a first public land mobile network PLMN, wherein the first PLMN is a PLMN associated with a terminal device, the first PLMN belongs to a PLMN set, and the PLMN set is associated with the first cell; and
the transceiver module is configured to send the first subgroup configuration information and paging indication information, wherein the paging indication information is used to page the terminal device in the first cell.

28. The communication apparatus according to claim 27, wherein the transceiver module is further configured to:
send indication information, wherein the indication information indicates the first PLMN, or the indication information indicates the first PLMN and the first subgroup configuration information.

29. The communication apparatus according to claim 27 or 28, wherein the first subgroup configuration information indicates one or more of the following:

whether the first cell supports a core network CN subgrouping mechanism used for the first PLMN;
a correspondence between a first group number and a second group number, wherein the first group number is a subgroup ID used by the terminal device to receive paging from the first cell, and the second group number is a subgroup ID from a core network device;
information about a first paging early indication PEI, wherein the first PEI indicates whether to receive paging; or
subgroup indication configuration information that is used to determine a location of a first indication in the paging indication information, wherein the first indication corresponds to a terminal device group, the terminal device group comprises the terminal device, and the first indication indicates whether to monitor a physical downlink control channel PDCCH corresponding to the terminal device group.

30. The communication apparatus according to claim 29, wherein the first subgroup configuration information indicates the correspondence between the first group number and the second group number, and the first subgroup configuration information comprises one or more of the following:

a value range of the first group number; or
an offset value between the first group number and the second group number.

31. The communication apparatus according to claim 29 or 30, wherein the first group number and the second group number satisfy one or more of the following relationships:

$$ID = k \bmod (n2 - n1 + 1) + n1, \text{ or } ID = k + M,$$

wherein
ID is the first group number, k is the second group number, mod is a modulo operation, the value range of the first group number is greater than or equal to n1 and less than or equal to n2, n1 and n2 are integers, M is the offset value between the first group number and the second group number, and M is an integer.

32. The communication apparatus according to claim 29, wherein the first subgroup configuration information indicates the information about the first PEI, and the first subgroup configuration information comprises one or more of the following:

a search space configuration of the first PEI;
a control resource set configuration of the first PEI;
a time domain resource location for monitoring the first PEI; or
a frequency domain resource location for monitoring the first PEI.

33. A communication apparatus, comprising a processor, a communication interface, and a memory, wherein the processor is coupled to the communication interface, and is configured to invoke computer instructions in the memory, to enable the communication apparatus to perform the method according to any one of claims 1 and 2.

34. A communication apparatus, wherein the communication apparatus comprises a processor, a communication interface, and a memory, the processor is coupled to the communication interface, and the processor is configured to invoke computer instructions in the memory, to enable the communication apparatus to perform the method according to any one of claims 3 to 10.

35. A communication apparatus, comprising a processor, a communication interface, and a memory, wherein the processor is coupled to the communication interface, and is configured to invoke computer instructions in the memory, to enable the communication apparatus to perform the method according to any one of claims 11 to 16.

36. A computer-readable storage medium, wherein the computer-readable storage medium stores computer instructions, and when the computer instructions are executed, the computer is enabled to perform the method according to any one of claims 1 and 2.

37. A computer-readable storage medium, wherein the computer-readable storage medium stores computer instructions, and when the computer instructions are executed, the computer is enabled to perform the method according to any one of claims 3 to 10.

38. A computer-readable storage medium, wherein the computer-readable storage medium stores computer instructions, and when the computer instructions are executed, the computer is enabled to perform the method according to any one of claims 11 to 16.

FIG. 1

FIG. 2

Terminal
device

Access network
device

S302: Indication information, where the indication
information indicates the first PLMN, or the
indication information indicates the first PLMN
and the first subgroup configuration information

S301

Obtain first subgroup configuration information corresponding
to a first PLMN, where the first PLMN is a PLMN associated
with the terminal device, the first PLMN belongs to a PLMN
set, and the PLMN set is associated with a first cell

S303

Receive paging from the first cell based on the first
subgroup configuration information

FIG. 3

First group
number ID

First group
number 1

Second group
number 1

Second group
number k

First group
number 2

Second group
number 2

PLMN 1

First group
number 3

Second group
number 3

Access
network

First group
number 4

Second group
number 1

...

PLMN 2

...

...

...

Second group
number 1

...

PLMN 5

First group
number ID

Second group
number k

FIG. 4

| First PEI | Second PEI | Third PEI | Paging occasion |

Time domain

PLMN 1                PLMN 2                PLMN 3

FIG. 5

| Paging indication information | | Paging occasion |

UE group 1

UE group 2

UE group 3

| 0 | 1 | 1 | 0 | 1 | ... | 1 | ... |

PLMN 1    PLMN 2    PLMN 3

FIG. 6

Terminal device

Access network device

S701: Third indication information, where the third indication information is used to page a terminal device associated with a first PLMN, the first PLMN belongs to a PLMN set, and the PLMN set is associated with a first cell

S702

Determine that an associated PLMN is the first PLMN, and receive paging from the first cell

FIG. 7

Terminal device

First core network device

Second core network device

S803: Subgrouping assistance information indicates a paging probability

S801: Subgrouping policy information, where the subgrouping policy information may indicate a policy used by the second core network device to group associated terminal devices

Determine, based on the subgrouping policy information, a subgrouping policy used for grouping terminal devices associated with the first core network device

S802

S804: The subgrouping assistance information indicates the paging probability

FIG. 8

900

910

920

Processing module

Transceiver module

FIG. 9

1000

1001

Processor

Instruction

1003

1002

Memory

Instruction

1004

Transceiver

1005

Antenna

1006

FIG. 10

Communication apparatus 1100

1120

1110

1111

Antenna

1112

Radio frequency unit

Board

1121

Memory

1122

Processor

FIG. 11

FIG. 12

## INTERNATIONAL SEARCH REPORT

International application No.

**PCT/CN2022/126457**

### A. CLASSIFICATION OF SUBJECT MATTER

H04W 8/26(2009.01)i

According to International Patent Classification (IPC) or to both national classification and IPC

### B. FIELDS SEARCHED

Minimum documentation searched (classification system followed by classification symbols)

H04W 8/-

Documentation searched other than minimum documentation to the extent that such documents are included in the fields searched

Electronic data base consulted during the international search (name of data base and, where practicable, search terms used)

CNABS; CNTXT; CNKI: 寻呼, 分组, 组号, 组数, 编号, 索引, ID, 标识, 模, mod, 偏移, 公共陆地移动网络, PLMN, 配置, 规则, 策略, 对应, 虚警; VEN; USTXT; WOTXT; EPTXT; 3GPP; IEEE: paging, subgroup+, number, serial, index, ID, identification, mod, offset, public land mobile network, PLMN, configuration, rule, strategy, paging false alarm, unnecessary paging

### C. DOCUMENTS CONSIDERED TO BE RELEVANT

| Category* | Citation of document, with indication, where appropriate, of the relevant passages | Relevant to claim No. |
|---|---|---|
| X | WO 2021189461 A1 (GUANGDONG OPPO MOBILE TELECOMMUNICATIONS CO., LTD.) 30 September 2021 (2021-09-30) description, paragraphs [0050], [0055]-[0057], and [0063]-[0073] | 3-4, 11-12, 19-20, 27-28, 34-35, 37-38 |
| A | CN 109474998 A (HUAWEI TECHNOLOGIES CO., LTD.) 15 March 2019 (2019-03-15) entire document | 1-38 |
| A | WO 2021109446 A1 (ZTE CORP.) 10 June 2021 (2021-06-10) entire document | 1-38 |
| A | WO 2020147122 A1 (LENOVO (BEIJING) CO., LTD.) 23 July 2020 (2020-07-23) entire document | 1-38 |
| A | WO 2021168812 A1 (GUANGDONG OPPO MOBILE TELECOMMUNICATIONS CO., LTD.) 02 September 2021 (2021-09-02) entire document | 1-38 |
| A | WO 2021163890 A1 (HUAWEI TECHNOLOGIES CO., LTD.) 26 August 2021 (2021-08-26) entire document | 1-38 |
| A | US 2017142560 A1 (LG ELECTRONICS INC.) 18 May 2017 (2017-05-18) entire document | 1-38 |

☑ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 January 2023** | **19 January 2023** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/126457**

**C.      DOCUMENTS CONSIDERED TO BE RELEVANT**

| Category* | Citation of document, with indication, where appropriate, of the relevant passages | Relevant to claim No. |
|---|---|---|
| A | WO 2021163890 A1 (HUAWEI TECHNOLOGIES CO., LTD.) 26 August 2021 (2021-08-26)<br>entire document | 1-38 |
| A | LENOVO et al. "R2-2009878 "Consideration on Idle/inactive-mode UE power saving""<br>*3GPP tsg_ran\wg2_rl2*, 23 October 2020 (2020-10-23),<br>entire document | 1-38 |

Form PCT/ISA/210 (second sheet) (January 2015)

## INTERNATIONAL SEARCH REPORT

International application No.

**PCT/CN2022/126457**

**Box No. III    Observations where unity of invention is lacking (Continuation of item 3 of first sheet)**

This International Searching Authority found multiple inventions in this international application, as follows:

[1]   Independent claims 1, 17, 33, and 36 respectively relate to a communication method relating to a grouping method, a communication device, and a computer-readable storage medium.

[2]   Independent claims 3, 11, 19, 21, 34, 35, 37, and 38 respectively relate to a communication method for a terminal device to determine to receive paging, a communication device, and a computer-readable storage medium.

1.  ☐   As all required additional search fees were timely paid by the applicant, this international search report covers all searchable claims.

2.  ☑   As all searchable claims could be searched without effort justifying additional fees, this Authority did not invite payment of additional fees.

3.  ☐   As only some of the required additional search fees were timely paid by the applicant, this international search report covers only those claims for which fees were paid, specifically claims Nos.:

4.  ☐   No required additional search fees were timely paid by the applicant. Consequently, this international search report is restricted to the invention first mentioned in the claims; it is covered by claims Nos.:

**Remark on Protest**    ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet) (January 2015)

**INTERNATIONAL SEARCH REPORT**
Information on patent family members

International application No.

**PCT/CN2022/126457**

| Patent document cited in search report | | | Publication date (day/month/year) | Patent family member(s) | | | Publication date (day/month/year) |
|---|---|---|---|---|---|---|---|
| WO | 2021189461 | A1 | 30 September 2021 | CN | 114868431 | A | 05 August 2022 |
| CN | 109474998 | A | 15 March 2019 | WO | 2019047770 | A1 | 14 March 2019 |
| WO | 2021109446 | A1 | 10 June 2021 | | None | | |
| WO | 2020147122 | A1 | 23 July 2020 | US | 2022095094 | A1 | 24 March 2022 |
| | | | | EP | 3912320 | A1 | 24 November 2021 |
| WO | 2021168812 | A1 | 02 September 2021 | CN | 114731556 | A | 08 July 2022 |
| | | | | WO | 2021169684 | A1 | 02 September 2021 |
| WO | 2021163890 | A1 | 26 August 2021 | EP | 4093065 | A1 | 23 November 2022 |
| | | | | US | 2022394662 | A1 | 08 December 2022 |
| WO | 2021163890 | A1 | 08 December 2022 | EP | 4093065 | A1 | 23 November 2022 |
| | | | | WO | 2021163890 | A1 | 26 August 2021 |
| US | 2017142560 | A1 | 18 May 2017 | WO | 2016003174 | A1 | 07 January 2016 |
| | | | | US | 10440524 | B2 | 08 October 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111229589